# EUROPEAN PATENT APPLICATION

(11) **EP 4 434 764 A1**
(43) Date of publication of application: **25.09.2024**
(21) Application number: 22895316.2
(22) Date of filing: 18.10.2022
(51) Int. Cl.: B60C 1/00, C09J 11/06, C09J 11/08, D02G 3/48, C09J 109/00, C09J 133/26, C09J 175/04, C09J 193/00, D06M 11/76, D06M 13/192, D06M 13/395, D06M 15/285, D06M 15/564, D06M 15/693, B60C 9/00

(54) **ADHESIVE COMPOSITION, ORGANIC FIBER, ORGANIC FIBER/RUBBER COMPOSITE MATERIAL, RUBBER ARTICLE, AND TIRE**

(30) Priority: 17.11.2021 JP 2021187402
(71) Applicant: BRIDGESTONE CORPORATION, Chuo-ku Tokyo 104-8340 (JP)
(72) Inventor: NAKAMURA Masaaki, Tokyo 104-8340 (JP)
(74) Representative: Marks & Clerk LLP
(86) International application number: PCT/JP2022/038820
(87) International publication number: WO 2023/090030

(57) **Abstract**

Provided are an adhesive composition that can ensure desired adhesiveness without using resorcin and does not impair workability in use, as well as an organic fiber material, a rubber article, an organic fiber-rubber composite and a tire using the adhesive composition. The adhesive composition of the present disclosure contains (A) rubber latex having unsaturated diene, and (B) a compound containing an acrylamide structure having a cationic group and/or a carboxyl group.

## Description

### TECHNICAL FIELD

This disclosure relates to an adhesive composition, an organic fiber, an organic fiber-rubber composite material, a rubber article, and a tire.

### BACKGROUND

To reinforce a rubber article such as a tire, organic fibers such as tire cords made of nylon fibers, polyester fibers and the like are conventionally adhered to a rubber composition such as a rubber composition for tires to form an organic fiber-rubber composite. A method of coating organic fibers with an adhesive composition, embedding them in a rubber composition, and vulcanizing them together with the rubber composition has been widely used for the adhesion.

In the process of coating the organic fiber with the adhesive composition, a solvent is generally used to adjust the viscosity of the adhesive composition, and it is preferable to use water, which has little environmental load, as the solvent because the solvent evaporates in the process. Further, when coating the organic fiber with the adhesive composition by immersion, it is necessary to reduce the viscosity of the adhesive composition to a low viscosity so that the adhesive composition can be applied by immersion.

Components contained in an aqueous adhesive composition with water-based properties, which is water-soluble or water-dispersible, are generally required to have a polar molecular structure. On the other hand, the polarity of a polymer material such as rubber or an organic fiber base material as an adherend is low, and if the difference between the polarity of the surface of the rubber or organic fiber base material or the like and the polarity of the components contained in the adhesive composition is large, it is difficult to adhere one to the other. Therefore, although the components contained in the aqueous adhesive composition must have polarity due to their water-based properties, the polarity should be controlled so that the adhesiveness will not be deteriorated due to the difference with the polarity of the adherend, so that the aqueous adhesive composition can be used as an adhesive composition for rubber articles. Therefore, an aqueous adhesive composition having functions that simultaneously solve the contradictions is suitably used.

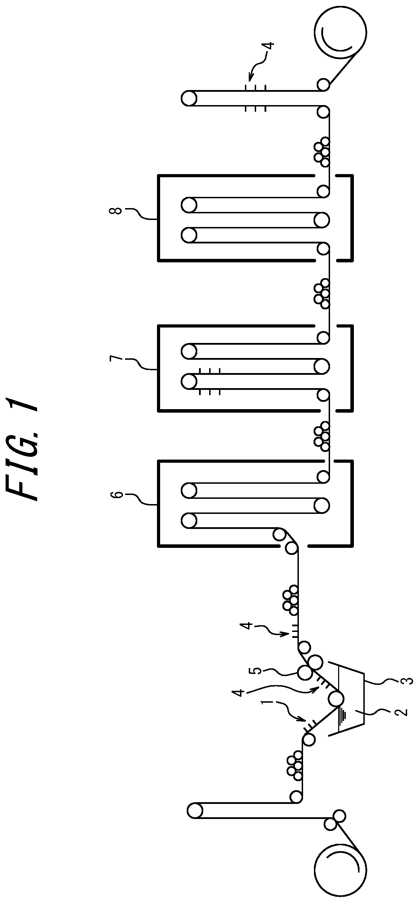

Regarding the process of coating the organic fiber with the adhesive composition, an example of the process of immersing an organic fiber cord such as a tire cord in an adhesive composition will be described with reference to FIG. 1.

An organic fiber cord 1 is unwound from an unwinding roll, conveyed by a roll, and runs into an immersion bathtub (dipping tub) 3 containing an adhesive composition 2, and the organic fiber cord 1 is immersed in the adhesive composition 2. An organic fiber cord 4 coated with the adhesive composition 2 is withdrawn from the immersion bathtub 3, and drawing rolls 5 remove the excess adhesive composition 2. Next, the organic fiber cord 4 coated with the adhesive composition 2 is further conveyed by rolls and subjected to drying in a drying zone 6, heat curing of the resin with tension applied to stretch the cord in a hot zone 7, heat curing of the resin with the tension accurately adjusted and normalized so as to achieve desired high elongation physical properties in a normalizing zone 8, and air-cooling outside the zones, and then is wound up by a winding roll. In this way, the organic fiber is coated with the adhesive composition.

Conventionally, a RFL (resorcin-formaldehyde-latex) adhesive composition obtained by aging a mixed solution containing resorcin, formaldehyde and rubber latex, or an adhesive composition obtained by mixing a specific adhesion promoter with the RFL adhesive composition has been used as the adhesive composition (see US 2128229 Specification (PTL 1), JP 2005-263887 A (PTL 2), JP 2006-37251 A (PTL 3), and JP H09-12997 A (PTL 4)).

As is well known, in the rubber industry, it has been found that an adhesive composition containing a water-dispersible rubber latex component, and an aqueous phenolic resin obtained by mixing and aging water-soluble resorcin and formaldehyde (PTL 1) has a function of achieving both adhesion to rubber as an adherend, and adhesion to the surface of a base material with low polarity such as an organic fiber, and the adhesive composition is widely used in the world. For the adhesion by the RFL adhesive composition, the rubber latex component adheres to the adherend rubber side by co-vulcanization, and the phenolic resin component that is a condensate of resorcin and formaldehyde and has adhesiveness to an organic fiber base material adheres to the adherend base material side.

The reason why resorcin is preferably used is as follows. Resorcin provides a phenolic condensed resin which is a resin-type one having high adhesiveness to an adherend, and at the same time, it can provide a resin component having high adhesiveness to the organic fiber base material side because a polar functional group introduced into the phenol ring to obtain water solubility is a hydroxyl group that has relatively low polarity and hardly causes steric hindrance.

The RFL adhesive composition is obtained by mixing and aging resorcin, formaldehyde, and rubber latex using rosin acid or the like as an emulsifier for polymerization, in the presence of a basic composition. It is presumed that, by this process, the water-soluble resorcin and the formaldehyde condense in a resol-type condensation reaction in the presence of the base (see PTL 2), while addition condensation occurring between the rosin acid on the latex surface and a methylol group at the terminal of resol-type phenol-formaldehyde addition condensation product (see Koichi Hakata, Network Polymer, Vol. 31, No. 5, p.252, (2010) (NPL 1)).

This aging causes the latex to cross-link with the resol-type resorcin-formaldehyde condensate via the rosin acid to enhance the adhesion, and the latex is composited with the aqueous resin to form an encapsulated protective colloid. In the treatment of the adhesive composition by the device as illustrated in FIG. 1, the rubber stickiness of the latex is suppressed, so that stain due to the adhesion of the adhesive composition to the device is reduced.

Further, an aqueous, that is, water-dispersible or water-soluble, adhesion promoter has been used as an adhesion promoter to be added to the RFL adhesive composition so that the aqueous adhesive composition improves the adhesion to the surface of a base material with low polarity such as an organic fiber cord material.

(Blocked) isocyanate such as methylene diphenyl diisocyanate with a particle size of 0.01 µm to 0.50 µm (see PTL 3), and water-dispersed particles of water-insoluble phenolic/novolak-type resin such as cresol novolak-type polyfunctional epoxy resin (see PTL 4) and the like have been used as the water-dispersible adhesion promoter.

Further, it has been proposed that a sodium hydroxide solution of novolak-type condensate obtained by novolak reaction of resorcin and formaldehyde (see WO 9713818 A1 (PTL 5)), a phenolic resin that dissolves in water in the presence of basic substances such as ammonium solutions of novolak-type condensates of chlorophenols and formaldehyde, an aqueous urethane compound having a (thermal dissociative blocked) isocyanate group and a self-soluble group (see JP 2011-241402 A (PTL 6)), a methylolated homoacrylamide polymer (see JP S56-067379 A (PTL 7)) or the like, as the adhesion promoter containing a water-soluble group, be mixed with resorcin-formaldehyde-latex and incorporated into the RFL adhesive composition.

In recent years, however, it has been required to reduce the use of resorcin, which has been used as a water-soluble component in the RFL adhesive composition, from the viewpoint of lowering the environmental load.

To respond to the requirement, various adhesive compositions that uses resorcin-free polyphenols and uses water as a solvent have been studied and proposed.

For example, an adhesive composition containing rubber latex and lignin resin (see WO 2018003572 A1 (PTL 8)), and an aqueous adhesive composition based on rubber latex and polyphenol such as flavonoid and aromatic polyaldehyde (see WO 2013017421 A1 (PTL 9) and JP 2016-528337 A (PTL 10)) are known as adhesive compositions containing no resorcin or formaldehyde.

For an adhesive composition used for decorative plywood or the like made by laminating paper and a base material such as plywood, an aqueous adhesive composition containing a water-soluble polyacrylamide-based resin and synthetic resin-based emulsion or rubber-based latex has been proposed as a material that does not emit formaldehyde. The water-soluble polyacrylamide-based resin has a structure in which a branched structure is introduced by the effect of chain transfer substituent, so that it is presumed to have many contact points especially with a base material such as wood and paper, which improves affinity and adhesion. However, there are no specific examples of using rubber-based latex in an aqueous adhesive composition, and it is only specified that the peel adhesion strength can be improved by using ethylene-vinyl acetate-based copolymer emulsion to adhere corrugated cardboard, cotton cloth to a different type of base material such as a stainless-steel plate, polyethylene, and rigid PVC. Therefore, an aqueous adhesive composition that uses a water-soluble polyacrylamide-based resin and rubber-based latex and that adheres to a rubber adherend through rubber co-vulcanization has not been sufficiently studied.

### CITATION LIST

### Patent Literature

PTL 1: US 2128229 Specification
PTL 2: JP 2005-263887 A
PTL 3: JP 2006-37251 A
PTL 4: JP H09-12997 A
PTL 5: WO 9713818 A1
PTL 6: JP 2011-241402 A
PTL 7: JP S56-067379 A
PTL 8: WO 2018003572 A1
PTL 9: WO 2013017421 A1
PTL 10: JP 2016-528337 A
PTL 11: JP 4810823 B

### Non-patent Literature

NPL 1: Koichi Hakata, Network Polymer, Vol. 31, No. 5, p.252, (2010)

### SUMMARY

### (Technical Problem)

However, when the above-described resorcin-free adhesive composition for organic fiber cords is used, the stickiness of rubber latex that is measured as the mechanical stability of the adhesive liquid under shear strain increases. As a result, in the process of coating the organic fiber cord 1 with the adhesive composition 2 and drying and heat curing as illustrated in FIG. 1, for example, much of the adhesive composition 2 adheres to the drawing rolls 5 and rolls in the drying zone 6 and the like, causing a new problem of poor workability in the process.

Such an adhesive composition containing no resorcin or formalin (the so-called "rubber cement") tends to have poor adhesiveness because the coating surface of the adhesive is roughened due to adhesion to the device. Further, since cross-linking between a latex component and a resorcin-formaldehyde condensate cannot be achieved, there is a problem in that the adhesiveness between an organic fiber and a coated rubber composition is lower than that of a conventional RFL adhesive composition.

When producing an aqueous adhesive composition by mixing polyphenol that has been mixed with rubber latex with aromatic dialdehyde such as terephthalaldehyde or 2,5-furandicarboxaldehyde that has low solubility in water, as described in PTL 8, the aromatic dialdehyde is difficult to dissolve in water during production, resulting in unsatisfactory workability.

The above-described resorcin-free adhesive composition also has a problem that the cord strength of an organic fiber cord coated with the adhesive composition is reduced.

It could thus be helpful to provide an adhesive composition that can ensure desired adhesiveness without using resorcin and does not impair workability in use, as well as an organic fiber material, a rubber article, an organic fiber-rubber composite and a tire using the adhesive composition.

### (Solution to Problem)

To solve the above problems, we have conducted extensive research on the composition of an adhesive composition. As a result, we found that, by blending a compound containing an acrylamide structure having a cationic group and/or a carboxyl group together with predetermined rubber latex, it is possible to obtain an adhesive composition that can ensure desired adhesiveness without using resorcin and does not impair workability in use, thereby completing the present disclosure.

That is, the adhesive composition of the present disclosure comprises
(A) rubber latex having unsaturated diene, and
(B) a compound containing an acrylamide structure having a cationic group and/or a carboxyl group, and
   further comprises at least one compound selected from the group consisting of
(C) an aqueous compound having a (thermal dissociative blocked) isocyanate group,
(D) polyphenol, and
(E) a polyvalent metal salt.

With the above configuration, excellent adhesiveness and mechanical stability can be achieved even without formalin or resorcin.

In the adhesive composition of the present disclosure, the (B) compound containing an acrylamide structure having a cationic group and/or a carboxyl group is a copolymer containing (a) (meth)acrylamide and (b) a vinyl monomer having a cationic group, and/or a copolymer of (a) (meth)acrylamide and (c) a vinyl monomer having a carboxyl group, where
these copolymers preferably optionally contain (d) another polymerizable monomer that is copolymerizable.

In the adhesive composition of the present disclosure, the (C) aqueous compound having a (thermal dissociative blocked) isocyanate group is preferably (C-1) a water-dispersible (thermal dissociative blocked) isocyanate compound that contains an addition product of polyisocyanate having an aromatic ring and a blocking agent having at least one active hydrogen group.

As used herein, the (C-1) water-dispersible (thermal dissociative blocked) isocyanate compound that contains an addition product of polyisocyanate having an aromatic ring and a blocking agent having at least one active hydrogen group is more preferably a block body of methylene diphenyl diisocyanate.

In the adhesive composition of the present disclosure, the (C) aqueous compound having a (thermal dissociative blocked) isocyanate group is also preferably (C-2) an aqueous urethane compound having a (thermal dissociative blocked) isocyanate group.

As used herein, the (C-2) aqueous urethane compound having a (thermal dissociative blocked) isocyanate group is a reaction product obtained by mixing (α), (β), (γ) and (δ) and reacting them, where
(α) is an organic polyisocyanate compound having 3 or more and 5 or less functional groups and having a number average molecular weight of 2,000 or less,
(β) is a compound having 2 or more and 4 or less active hydrogen groups and having a number average molecular weight of 5,000 or less,
(γ) is a thermal dissociative blocking agent, and
(δ) is a compound having at least one active hydrogen group and at least one anionic, cationic, or nonionic hydrophilic group, and
(α), (β), (γ) and (δ) are mixed so that
the mixing ratio of (α) is 40 % by mass or more and 85 % by mass or less,
the mixing ratio of (β) is 5 % by mass or more and 35 % by mass or less,
the mixing ratio of (γ) is 5 % by mass or more and 35 % by mass or less, and
the mixing ratio of (δ) is 5 % by mass or more and 35 % by mass or less
with respect to the total amount of (α), (β), (γ) and (δ), and
it is more preferable that, when the molecular weight of the isocyanate group (-NCO) is 42, the composition ratio of the (thermal dissociative blocked) isocyanate group in the reaction product is 0.5 % by mass or more and 11 % by mass or less.

Further, the (C-2) aqueous urethane compound having a (thermal dissociative blocked) isocyanate group is preferably represented by the following general formula (1), 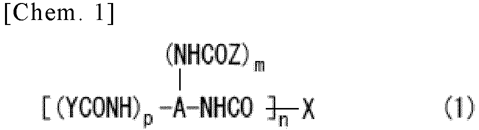 [where
A is a residue of an organic polyisocyanate compound from which an active hydrogen group has been eliminated,
X is a residue of a polyol compound having 2 or more and 4 or less hydroxyl groups and having a number average molecular weight of 5,000 or less from which an active hydrogen group has been eliminated,
Y is a residue of a thermal dissociative blocking agent from which an active hydrogen group has been eliminated,
Z is a residue of a compound having at least one active hydrogen group and at least one salt-producing group or hydrophilic polyether chain, from which an active hydrogen group has been eliminated,
n is an integer of 2 or more and 4 or less, and
p + m is an integer of 2 or more and 4 or less (m ≥ 0.25)].

In the adhesive composition of the present disclosure, the (D) polyphenol is preferably a plant-derived compound having a plurality of phenolic hydroxy groups in molecule. It is more preferably lignin, tannin, tannic acid, flavonoid, or a derivative thereof.

In the adhesive composition of the present disclosure, the (E) polyvalent metal salt is preferably a divalent or higher metal ion salt.

Further, in the adhesive composition of the present disclosure, the (E) polyvalent metal salt is preferably a polyvalent metal salt inorganic filler or mordant.

The adhesive composition of the present disclosure can be free of resorcin.

In the organic fiber of the present disclosure, the surface of a resin base material is coated with an adhesive layer of the adhesive composition of the present disclosure described above.

The organic fiber of the present disclosure is preferably a cord obtained by twisting a plurality of filaments, where it is more preferable that the cord obtained by twisting a plurality of filaments includes second twisting and first twisting, the fiber thickness of the cord obtained by twisting is 100 dtex to 5000 dtex, the number of first twists is 10 times/10 cm to 50 times/10 cm, and the number of second twists is 10 times/10 cm to 50 times/10 cm, and it is still more preferable that the adhesive layer is 0.5 % by mass to 6.0 % by mass of the mass of the cord in terms of dry mass.

In the organic fiber of the present disclosure, the organic fiber is preferably made of polyester resin.

The organic fiber-rubber composite of the present disclosure is a composite of organic fiber and rubber, where the surface of the organic fiber is coated with the adhesive composition of the present disclosure described above.

The rubber article of the present disclosure uses the organic fiber-rubber composite of the present disclosure described above.

The tire of the present disclosure uses the organic fiber-rubber composite of the present disclosure described above.

### (Advantageous Effect)

According to the present disclosure, it is possible to provide an adhesive composition that can ensure desired adhesiveness without using resorcin and does not impair workability in use, as well as an organic fiber material, a rubber article, an organic fiber-rubber composite, and a tire using the adhesive composition.

### BRIEF DESCRIPTION OF THE DRAWINGS

In the accompanying drawings:
FIG. 1 schematically illustrates an example of a process of coating an organic fiber cord with an adhesive composition by immersion; and
FIG. 2 schematically illustrates a cross section of an enlarged example of an organic fiber-rubber composite of the present disclosure.

### DETAILED DESCRIPTION

The following describes an adhesive composition, an organic fiber material, a rubber article, an organic fiber-rubber composite and a tire of the present disclosure in detail based on their embodiments. These descriptions are for the purpose of exemplifying the present disclosure and do not limit the present disclosure in any way.

In the present specification, the ends of a range are also included in the range unless otherwise specified.

### [Adhesive composition]

An adhesive composition of the present disclosure contains (A) rubber latex having unsaturated diene and (B) a compound containing an acrylamide structure having a cationic group and/or a carboxyl group.

According to the adhesive composition of the present disclosure, by having the above configuration, good adhesion, especially good adhesion between an organic fiber and a coated rubber composition can be secured without using resorcin. In the adhesive composition of the present disclosure, the (A) rubber latex having unsaturated diene contributes to improving the adhesiveness. Further, by using the (B) compound containing an acrylamide structure having a cationic group and/or a carboxyl group, it is possible to suppress the adhesion of the adhesive composition to a roll or the like, especially in a process of coating an organic fiber with the adhesive composition and drying and heat curing, by suppressing the stickiness of the rubber latex measured as the mechanical stability under shear strain of an adhesive liquid, so that the workability is good.

Therefore, according to the adhesive composition of the present disclosure, it is possible to obtain desired adhesiveness without using resorcin and also to ensure good workability in use. Further, according to the adhesive composition of the present disclosure, it is possible to lower the environmental load because there is no need to use resorcin.

Therefore, the adhesive composition of the present disclosure can be free of resorcin. Further, the adhesive composition of the present disclosure preferably contains no formaldehyde.

The adhesive composition of the present disclosure is particularly useful when applied to the organic fiber cord described below.

### <(A) Rubber latex having unsaturated diene>

The adhesive composition of the present disclosure contains (A) rubber latex having unsaturated diene.

Examples of the (A) rubber latex having unsaturated diene include synthetic rubber latex having unsaturated diene, and natural rubber latex.

The synthesis rubber latex having unsaturated diene in the adhesive composition of the present disclosure means synthetic rubber latex containing unsaturated diene that is vulcanizable with sulfur.

In one embodiment of the present disclosure, the (A) rubber latex having unsaturated diene contained in the adhesive composition is a component for adhering an adhesive layer of the adhesive composition to a coated rubber composition that is an adherend thereof. The rubber latex having unsaturated diene is compatible with a rubber polymer contained in the coated rubber composition as an adherend, and rubber co-vulcanization adhesion is formed by co-vulcanization of unsaturated diene moieties. As a result, according to the adhesive composition of the present disclosure containing (A) rubber latex having unsaturated diene, it is possible to achieve good adhesion between, for example, an organic fiber cord and a coated rubber composition.

The (A) rubber latex having unsaturated diene is not limited, and examples thereof include synthetic rubber latex such as styrene-butadiene copolymer rubber latex, vinylpyridine-styrene-butadiene copolymer rubber latex, carboxyl group-modified styrene-butadiene copolymer rubber latex, nitrile rubber latex, and chloroprene rubber latex. These may be used alone or in combination of two or more.

Among the above, vinylpyridine-styrene-butadiene copolymer rubber latex is preferred. The reason is as follows. Vinylpyridine-styrene-butadiene copolymer rubber latex is rubber latex which has been widely used in adhesive compositions and also in articles such as tires. In the adhesive composition of the present disclosure, it provides a good bond between the adhesive layer and rubber as an adherend and has the advantage of being relatively soft and flexible, thereby achieving organic fiber cord deformation without splitting the adhesive layer.

The content (solid content) of the (A) rubber latex having unsaturated diene in the total solid content of the adhesive composition of the present disclosure is not particularly limited. It is preferably 25 % by mass or more, more preferably 40 % by mass or more, and still more preferably 50 % by mass or more. Further, the content of the (A) rubber latex having unsaturated diene is preferably 99.5 % by mass or less, more preferably 95 % by mass or less, and still more preferably 90 % by mass or less. The reason is as follows. When the content of the (A) rubber latex having unsaturated diene is 25 % by mass or more, the compatibility between rubber polymers of the coated rubber composition and the rubber latex contained in the adhesive composition becomes more appropriate, and the adhesion state of coated rubber in the organic fiber-rubber composite improves. On the other hand, when the content of the (A) rubber latex having unsaturated diene is 99.5 % by mass or less, the amount of coating component that suppresses the stickiness of latex contained as another component in the adhesive composition can be ensured at a relatively constant level or more compared to rubber cement. Therefore, in a process of coating a fiber material to be adhered with the adhesive composition, it is possible to suppress the adhesive composition from adhering to the device as illustrated in FIG. 1. Further, in this case, the problem that the surface of the coated adhesive composition roughens and the adhesiveness to a coated rubber composition deteriorates hardly occurs, which improves the adhesiveness.

The (A) rubber latex having unsaturated diene can be obtained, for example, by dissolving an emulsifier such as potassium rosinate in water, then adding a mixture of monomers to the mixture, further adding an electrolyte such as sodium phosphate and peroxides and the like as a polymerization initiator, performing polymerization, and then, after reaching a predetermined conversion rate, adding a charge transfer agent, stopping the polymerization, and removing the residual monomers. Further, it is preferable to use a chain transfer agent during the polymerization.

The emulsifier may be at least one selected from anionic surfactants such as an alkali metal salt of a fatty acid, an alkali metal salt of rosin acid, a formaldehyde-condensed sodium naphthalene sulfonate, a sulfate ester of a higher alcohol, an alkylbenzene sulfonate and an aliphatic sulfonate, or nonionic surfactants such as alkyl ester, alkyl ether, and alkylphenyl ether types of polyethylene glycol.

Among these emulsifiers, it is preferable to contain a metal salt of rosin acid, especially an alkali metal salt of rosin acid. It can be used alone, that is, in only one type, or in combination with other emulsifiers in two or more types. The rosin acid is a mixture of resin acids with similar chemical structures, mainly composed of tricyclic diterpenes obtained from pine resin and the like. These resin acids have three ring structures, two double bonds, and one carboxyl group, and they have functional groups with high reactivity, such as the double bond portion reacting with unsaturated carboxylic acids, or esterification at the methylol end of resol phenolic resin and the carboxyl group portion.

The amount of such an emulsifier used is usually 0.1 parts by mass to 8 parts by mass, preferably 1 part by mass to 5 parts by mass, with respect to 100 parts by mass of all monomers used in latex polymerization.

Examples of the polymerization initiator includes a water-soluble initiator such as potassium persulfate, sodium persulfate and ammonium persulfate, a redox-based initiator, or an oil-soluble initiator such as benzoyl peroxide. Among the above, it is preferable to use potassium persulfate.

Examples of the chain transfer agent include monofunctional alkyl mercaptans such as n-hexyl mercaptan, t-dodecyl mercaptan, n-dodecyl mercaptan, n-octyl mercaptan, n-tetradecyl mercaptan, and t-hexyl mercaptan; bifunctional mercaptans such as 1,10-decanedithiol and ethylene glycol dithioglycolate; trifunctional mercaptans such as 1,5,10-canditrithiol and trimethylolpropane tristhioglycolate; tetrafunctional mercaptans such as pentaerythritol tetrakisthioglycolate; disulfides; halogen compounds such as carbon tetrachloride, carbon tetrabromide, and ethylene bromide; and α-methylstyrene dimer, terpinolene, α-terpinene, dipentene, and allyl alcohol. These may be used alone or in combination of two or more.

Among these chain transfer agents, alkyl mercaptan is preferable, and n-octyl mercaptan and t-dodecyl mercaptan are more preferable. Among the above, it is preferable to use t-dodecyl mercaptan.

The amount of such a chain transfer agent used is usually 0.01 parts by mass to 5 parts by mass, preferably 0.1 parts by mass to 3 parts by mass, with respect to 100 parts by mass of all monomers used in latex polymerization.

In addition to the above components, general-purpose additives such as an antioxidant like hindered phenols, a silicone-based, higher alcohol-based or mineral oil-based defoamer, a reaction terminator, and an antifreezing agent may be used for the latex, if necessary.

The vinylpyridine-styrene-butadiene copolymer rubber latex is a ternary copolymer of a vinylpyridine-based monomer, a styrene-based monomer, and a conjugated diene-based butadiene monomer, and these monomers may be further added with other copolymerizable monomers.

The vinylpyridine-based monomer includes vinylpyridine and substituted vinylpyridine in which a hydrogen atom in the vinylpyridine is substituted with a substituent. Examples of such a vinylpyridine-based monomer include 2-vinylpyridine, 3-vinylpyridine, 4-vinylpyridine, 2-methyl-5-vinylpyridine, and 5-ethyl-2-vinylpyridine, among which 2-vinylpyridine is preferable. These vinylpyridine-based monomers may be used alone or in combination of two or more.

The styrene-based monomer includes styrene and substituted styrene in which a hydrogen atom in the styrene is substituted with a substituent. Examples of the styrene-based monomer include styrene, α-methylstyrene, 2-methylstyrene, 3-methylstyrene, 4-methylstyrene, 2,4-diinopropylstyrene, 2,4-dimethylstyrene, 4-t-butylstyrene, and hydroxymethylstyrene, among which styrene is preferable. These styrene-based monomers may be used alone or in combination of two or more.

Examples of the conjugated diene-based butadiene monomer include aliphatic conjugated butadiene compounds such as 1,3-butadiene and 2-methyl-1,3-butadiene, among which 1,3-butadiene is preferable. These conjugated diene-based butadiene monomers may be used alone or in combination of two or more.

The vinylpyridine-styrene-butadiene copolymer rubber latex can be synthesized with a known method, and specific examples thereof include a method described in JP H09-78045 A according to studies by the inventors of the present disclosure. With these methods, it is possible to have various compositions and intra-particle structures such as copolymers with uniform or different composition ratios within one particle of the vinylpyridine-styrene-butadiene copolymer rubber latex.

The vinylpyridine-styrene-butadiene copolymer rubber latex may be a commercially available product of a copolymer with a uniform composition monomer mixture ratio in one particle, and examples thereof include Nipol 2518 manufactured by Zeon Corporation, PYRATEX manufactured by NIPPON A&L INC. Further, examples of a commercially available product of a copolymer with different composition monomer mixture ratios in one particle include V0658 manufactured by JSR Corporation. All of these can be used as the (A) rubber latex having unsaturated diene of the adhesive composition of the present disclosure.

In the vinylpyridine-styrene-butadiene copolymer rubber latex, the monomer ratio of vinylpyridine: styrene: butadiene is not particularly limited. However, among the copolymers constituting the vinylpyridine-styrene-butadiene copolymer particles, it is preferable to include a copolymer obtained by polymerizing a monomer mixture consisting of 5 % by mass to 20 % by mass of vinylpyridine, 10 % by mass to 40 % by mass of styrene, and 45 % by mass to 75% by mass of butadiene. The reason is as follows. When the content of vinylpyridine is 5 % by mass or more, there is an appropriate amount of pyridine moiety that has a vulcanization promoting effect in the rubber component, and the adhesiveness of the entire adhesive layer further improves as the degree of cross-linking is increased by sulfur. When the content of vinylpyridine is 20 % by mass or less, it is possible to obtain a hard adhesive without the degree of cross-linking of the rubber being overvulcanized. When the content of styrene is 10 % by mass or more, the strength of the latex particles and the adhesive layer is sufficient, and the adhesiveness is further improved. When the content of styrene is 40 % by mass or less, the adhesiveness is ensured with appropriate co-vulcanization properties between the adhesive layer and the rubber as an adherend. When the content of butadiene is 45 % by mass or more, it is possible to form cross-links more sufficiently. When the content of butadiene is 75 % by mass or less, durability in terms of volume and modulus change can be ensured satisfactorily with moderate cross-linking. The composition ratio of the monomer mixture of vinylpyridine: styrene: butadiene may be preferably, for example, 15: 15: 70.

In the present disclosure, the (A) rubber latex having unsaturated diene may be natural rubber latex, in addition to synthetic rubber latex having unsaturated diene. The natural rubber latex is not particularly limited, and examples thereof include field latex, ammonia-treated latex, centrifuged concentrated latex, deproteinized latex treated with surfactants and enzymes, and combinations thereof. Among the above, it is preferable to use field latex.

### <(B) Compound containing acrylamide structure having cationic group and/or a carboxyl group>

The adhesive composition of the present disclosure contains (B) a compound containing an acrylamide structure having a cationic group and/or a carboxyl group.

The (B) compound containing an acrylamide structure having a cationic group and/or a carboxyl group is preferably a copolymer containing (a) (meth)acrylamide and (b) a vinyl monomer having a cationic group, and/or a copolymer of (a) (meth)acrylamide and (c) a vinyl monomer having a carboxyl group, or a modified product thereof.

Optionally, it may contain (d) another polymerizable monomer that is copolymerizable.

As used herein, the (a) (meth)acrylamide refers to acrylamide and methacrylamide (note that (meth)acryl is the same as acryl and/or methacryl, and will be abbreviated in the same manner below). In the (B) compound containing an acrylamide structure having a cationic group and/or a carboxyl group of the present disclosure, the "acrylamide structure" can be obtained from a structure obtained by polymerizing an acrylamide component mainly composed of the (a) (meth)acrylamide. The (meth)acrylamide can be used alone or in combination of two types. Acrylamide is preferably used alone from the viewpoint of economic efficiency.

The content ratio of the (a) (meth)acrylamide is, for example, 50 mol% or more, preferably 60 mol% or more, and is, for example, 99 mol% or less, preferably 97 mol% or less, with respect to all monomers of acrylamide-based polymer. When the (a) (meth)acrylamide is less than 50 mol%, the adhesive strength due to cohesive force such as hydrogen bonding due to amide moiety is reduced, and when it exceeds 99 mol%, the ion amount of water-soluble resin is insufficient, resulting in insufficient adhesion to a base material such as adhered fiber.

Examples of the (b) vinyl monomer having a cationic group include vinyl monomers having a primary amino group, a secondary amino group, a tertiary amino group, or quaternary ammonium salts.

Examples of the vinyl monomer having a primary amino group include 2-propenylamine, 2-methyl-2-propenylamine; inorganic acid salts such as hydrochlorides or sulfates of these primary amino-based monomers; and organic acid salts such as formates or acetates of these primary amino-based monomers.

Examples of the vinyl monomer having a secondary amino group include di(2-propenyl)amine (diallylamine), di(2-methyl-2-propenyl)amine; inorganic acid salts such as hydrochlorides or sulfates of these secondary amino-based monomers; and organic acid salts such as formates or acetates of these secondary amino-based monomers.

Examples of the vinyl monomer having a tertiary amino group include dialkylaminoalkyl (meth)acrylates such as N,N-dimethylaminoethyl (meth)acrylate, N,N-diethylaminoethyl (meth)acrylate, and N,N-dimethylaminopropyl (meth)acrylate; dialkylaminoalkyl (meth)acrylamides such as N,N-dimethylaminoethyl (meth)acrylamide, N,N-diethylaminoethyl (meth)acrylamide, N,N-dimethylaminopropyl (meth)acrylamide, and N,N-diethylaminopropyl (meth)acrylamide; tertiary amine-based monomers such as allylamine, diallylamine, and vinylpyridine; inorganic acid salts such as hydrochlorides or sulfates of these tertiary amine-based monomers; and organic acid salts such as formates or acetates of these tertiary amine-based monomers. Among the above, N,N-dimethylaminoethyl (meth)acrylate is preferred as the vinyl monomer having a tertiary amino group in terms of polymerizability and cost.

The vinyl monomer having quaternary ammonium salts is a cationic copolymerizable monomer having a quaternary ammonium group and having an ethylenic double bond. Examples thereof include a vinyl monomer of a quaternary ammonium salt obtained by reacting the vinyl monomer having a tertiary amino group with an alkylating agent (a quaternary compound of a tertiary amino-based monomer), and a quaternary compound obtained by quaternizing a tertiary amino group of a diallylamine derivative monomer. These quaternary ammonium-based monomers can be used alone or in combination of two or more.

For the quaternary compound of a tertiary amino-based monomer, examples of the alkylating agent for quaternizing the tertiary amino group of the polymerizable monomer having a tertiary amino group include alkyl halides such as methyl chloride and methyl bromide; aralkyl halides such as benzyl chloride; and quaternary compounds using dimethyl sulfate, diethyl sulfate, epichlorohydrin, glycidyltrialkylammonium chloride, 3-chloro-2-hydroxypropyltrimethylammonium chloride, and the like.

Among these quaternary compounds of a tertiary amino-based monomer, a quaternary compound of dialkylaminoalkyl (meth)acrylamide is preferred. Further, preferred examples of the alkylating agent for quaternizing include quaternary compounds using methyl chloride or benzyl chloride.

Examples of the quaternary compound of a diallylamine derivative monomer include diallyldimethylammonium chloride, diallyldimethylammonium bromide, diallyldiethylammonium chloride, diallyldibutylammonium chloride, and diallylmethylethylammonium chloride.

Among these quaternary compounds of a diallylamine derivative monomer, diallyldimethylammonium chloride is preferred.

In the present disclosure, the above-mentioned vinyl monomers having a primary amino group, a secondary amino group, a tertiary amino group, or quaternary ammonium salts can be used alone or in combination of two or more.

For primary to tertiary amino groups, dissociation of amino groups is suppressed at a pH of 7 or higher. On the other hand, if it contains a quaternary ammonium base, dissociation is possible even at a pH of 9 or higher, so that the cationic function can generally be maintained over a wide range of pH when mixed with latex having a pH of 10 or higher. Further, because the primary amine group has a higher hydrogen bonding force than tertiary and quaternary amines, the interactions with other components of the adhesive composition can be increased.

The content ratio of the (b) vinyl monomer having a cationic group is, for example, 0.01 mol% or more, preferably 0.5 mol% or more, and is, for example, 20 mol% or less, preferably 10 mol% or less, with respect to all monomers of the acrylamide-based polymer.

When the content ratio of the vinyl monomer having a cationic group is 0.01 mol% or more, it is adsorbed by coacervation to the surface of latex particles dispersed in water by an anionic surfactant and coated on the surface, thereby suppressing the stickiness of latex. From the same viewpoint, the content ratio is preferably 0.5 mol% or more. When the content ratio of the vinyl monomer having a cationic group is 20 mol% or less, the aggregability between particles is increased, which is not preferable. When the content ratio of the vinyl monomer having a cationic group is 10 mol% or less, the degree of polymerization during production hardly shortens, which is preferable.

The (c) vinyl monomer having a carboxyl group is not particularly limited as long as it is a vinyl monomer having a carboxyl group in molecule. Examples thereof include an unsaturated monocarboxylic acid, an unsaturated dicarboxylic acid, an unsaturated tricarboxylic acid, an unsaturated tetracarboxylic acid, and salts thereof.

Specific examples thereof include an unsaturated monocarboxylic acid such as (meth)acrylic acid, angelic acid, tiglic acid, crotonic acid, and isocrotonic acid; an unsaturated dicarboxylic acid such as maleic acid, fumaric acid, itaconic acid, aconitic acid, mesaconic acid, muconic acid, and citraconic acid; a 3-butene-1,2,3-tricarboxylic acid; an unsaturated tricarboxylic acid such as 4-pentene-1,2,4-tricarboxylic acid and aconitic acid; and alkali metal salts such as sodium salts, potassium salts, or ammonium salts of these various organic acids.

In the present disclosure, these vinyl monomers having a carboxyl group in molecule of unsaturated carboxylic acids and salts thereof can be used alone or in combination of two or more. Among the above, an unsaturated monocarboxylic acid and an unsaturated dicarboxylic acid, specifically, acrylic acid, 2-acrylamide-N-glycolic acid, itaconic acid and its salts are preferred from the viewpoint of polymerizability and cost, and an acrylic acid or its sodium salt is particularly preferred.

The content ratio of the (c) vinyl monomer having a carboxyl group is, for example, 0.01 mol% or more, preferably 0.5 mol% or more, and is, for example, 20 mol% or less, preferably 10 mol% or less, with respect to all monomers of the acrylamide-based polymer.

When anionic polymerizable monomer is contained in an amount of 0.01 mol% or more with respect to all monomers, polyamide adsorbed to latex has dispersibility due to the anionic group, which increases the effect of suppressing stickiness. On the other hand, when the number of carboxyl groups is increased, the acidity increases in the rubber vulcanization, and the sulfur cross-linking reaction of rubber latex decreases when the acidity is strong, so that cross-linking of the adhesive layer tends to decrease.

The (B) compound containing an acrylamide structure having a cationic group and/or a carboxyl group used in the present disclosure may be a copolymer containing (d) another polymerizable monomer that is copolymerizable from the viewpoint of processability.

Examples of the other polymerizable monomer include N-substituted lower alkyl acrylamide other than (meth)acrylamide such as N-ethyl acrylamide, N,N-dimethyl acrylamide, and N-isopropylacrylamide; N,N-dialkyl (meth)acrylamide such as N,N-dimethyl (meth)acrylamide, N,N-diethyl (meth)acrylamide, and N,N-diisopropyl (meth)acrylamide; alkylene bis(meth)acrylamide such as methylene bis(meth)acrylamide and ethylene bis(meth)acrylamide; allyl (meth)acrylamide; and a N-substituted acrylamide-based monomer such as N,N'-dimethylacrylamide, diacetone acrylamide, and isopropylacrylamide.

Examples of another polymerizable monomer that is copolymerizable and contains an imide group include diacryloylimide.

Among the above, alkyl (meth)acrylate and hydroxyalkyl (meth)acrylate can be suitably used as the other polymerizable monomer.

Examples of another polymerizable monomer that contains no amide group or imide group include alkyl (meth)acrylate such as methyl (meth)acrylate, ethyl (meth)acrylate, propyl (meth)acrylate, butyl (meth)acrylate, 2-ethylhexyl (meth)acrylate, and cyclohexyl (meth)acrylate; (meth)acrylate having a hydroxyl group such as hydroxyalkyl (meth)acrylate such as hydroxyethyl (meth)acrylate and hydroxypropyl (meth)acrylate, and glycerol mono(meth)acrylate; polyalkylene glycol mono(meth)acrylate such as diethylene glycol(meth)acrylate and methoxypolyethylene glycol(meth)acrylate; polyalkylene glycol di(meth)acrylate such as ethylene glycol di(meth)acrylate and diethylene glycol di(meth)acrylate; polyalkylene glycol monoether mono(meth)acrylate such as acrylate of a diethylene glycol monoethyl ether compound; epoxy acrylate; urethane acrylate; a nitrile compound-based monomer such as acryloylmorpholine and (meth)acrylonitrile; olefins such as vinyl acetate, vinyl chloride, vinylidene chloride, ethylene, propylene, and butene; substituted vinyl acetate such as isopropenyl acetate and 1-methoxyvinyl acetate; an aromatic vinyl monomer such as styrene, α-methylstyrene, vinyltoluene, vinylpyrrolidone, and vinyloxazoline; a sulfonic acid-based monomer having a vinyl group such as vinyl sulfonic acid, styrene sulfonic acid, 2-acrylamido-2-methylpropanesulfonic acid, (meth)allylsulfonic acid, and diacryloylimide; and salts such as alkali metal salts such as sodium salts and potassium salts of these various organic acids, or ammonium salts of these various organic acids.

These other polymerizable monomers may be used alone or in combination of two or more. Among the above, from the viewpoint that when a branched structure is introduced by an elongation reaction during polymerization, a cured coating after heat treatment of the adhesive composition obtains high hardness and excellent adhesion to a base material, it is preferable to use a cross-linking monomer containing an amide group such as a N-substituted acrylamide-based monomer such as methylene bis(meth)acrylamide, ethylene bis(meth)acrylamide, allyl (meth)acrylamide, N,N'-dimethyl acrylamide, diacetone acrylamide, and isopropylacrylamide; a cross-linking monomer containing an imide group such as diacryloylimide; a nitrogen-free bifunctional cross-linking monomer such as divinylbenzene, ethylene glycol di(meth)acrylate, diethylene glycol di(meth)acrylate, triethylene glycol di(meth)acrylate, and allyl (meth)acrylate; and a nitrogen-free polyfunctional cross-linking monomer such as pentaerythritol triacrylate, trimethylolpropane acrylate, and tetraallyloxyethane.

Among suitable monomers, N,N-dialkyl (meth)acrylamide and alkylene bis(meth)acrylamide are more preferably used, and N,N-dimethylacrylamide and methylene bis(meth)acrylamide are particularly preferably used.

Monomers used in the copolymer containing (d) another polymerizable monomer that is copolymerizable are not limited to the monomers exemplified above.

The (d) another polymerizable monomer that is copolymerizable is an optional component, and the amount used is not particularly limited. However, it is approximately 0.01 mol% or more and preferably 0.1 mol% to 40 mol%. For example, it is 0.01 mol% or more and preferably 0.1 mol% or more, and for example, it is 30 mol% or less and preferably 20 mol% or less.

The (B) compound containing an acrylamide structure having a cationic group and/or a carboxyl group may be further modified. It may be a cross-linked modified product obtained by adding a hydrazide compound such as hydrazine, a modified product in which a part of the acrylamide structure derived from (a) (meth)acrylamide is modified into a cationic group by Mannich modification of polyacrylamide, a modified product of cationic polyacrylamide modified with glyoxal or other formaldehyde-based cross-linking agents such as glyoxalated polyacrylamide, or the like.

The (B) compound containing an acrylamide structure having a cationic group and/or a carboxyl group is a copolymer containing (a) (meth)acrylamide and (b) a vinyl monomer having a cationic group, and/or a copolymer of (a) (meth)acrylamide and (c) a vinyl monomer having a carboxyl group, or a modified product thereof. Specifically, an example of a compound containing a copolymer of (a) (meth) acrylamide and (b) a vinyl monomer having a cationic group is a cationic polyacrylamide, an example of a compound containing a copolymer of (a) (meth) acrylamide and (c) a vinyl monomer having a carboxyl group is an anionic polyacrylamide containing a carboxyl group, and an example of a copolymer of a polymer containing (a) (meth) acrylamide and (b) a vinyl monomer having a cationic group, and (c) a vinyl monomer having a carboxyl group is an amphoteric polyacrylamide containing a carboxyl group.

These (B) compounds containing an acrylamide structure having a cationic group and/or a carboxyl group can be obtained, for example, by reacting cationic polyacrylamide, anionic polyacrylamide containing a carboxyl group, or amphoteric polyacrylamide with a known method.

For example, although the production method is not particularly limited, it can be obtained by copolymerizing a mixture of (meth)acrylamide and a cationic vinyl monomer and/or an anionic vinyl-based monomer having a carboxyl group by aqueous solution polymerization, emulsion polymerization using water and an organic solvent, suspension polymerization, or the like. The production can be performed with various conventionally known methods such as simultaneous polymerization and continuous dropping polymerization. For example, the copolymer can be produced by charging the mixture of monomers and water, adding a known radical polymerization initiator such as persulfate such as potassium persulfate and ammonium persulfate or a redox-based polymerization initiator, further adding a chain transfer agent as necessary, and performing polymerization at about 15 °C to 100 °C for 0.1 to several hours under stirring. The polymerization reaction is stopped by adding a known polymerization terminator such as sodium thiosulfate or sodium sulfite.

Examples of the chain transfer agent include isopropyl alcohol and mercaptos (e.g., mercaptoethanol, thiourea, thioglycolic acid, mercaptopropionic acid, thiosalicylic acid, thiolactic acid, aminoethanethiol, thioglycerol, and thiomalic acid). The amount of such a chain transfer agent used is usually 0.01 parts by mass to 5 parts by mass and preferably 0.1 parts by mass to 3 parts by mass, with respect to 100 parts by mass of the total monomer weight of the (B) compound containing an acrylamide structure having a cationic group and/or a carboxyl group.

The (B) compound containing an acrylamide structure having a cationic group and/or a carboxyl group of the present disclosure thus obtained can be obtained in the form of an aqueous solution or aqueous dispersion product. A compound containing an acrylamide structure obtained in a gel form may be mechanically pulverized and then redispersed in water before use. When used in the adhesive composition of the present disclosure, an aqueous solution is preferred.

The weight average molecular weight of the (B) compound containing an acrylamide structure having a cationic group and/or a carboxyl group thus obtained is, for example, 1 million or more, preferably 2 million or more, and further preferably 2 million or more, and is, for example, 15 million or less, preferably 10 million or less, and further preferably 8 million or less. When the weight average molecular weight of the acrylamide-containing compound is 1 million or more, aggregation of the rubber latex particles can be more reliably suppressed, and when the weight average molecular weight of the acrylamide-containing compound is 150 million or less, there is no problem in that the acrylamide-containing compound is cross-linked and gelatinized.

When the pH is usually about 3 to 9 and the viscosity is about 100 to 10000 m Pa·s in an aqueous solution of 10 wt% during the production, the liquid can be easily used because the storage, transfer and the like in a liquid state can be easily achieved.

The (B) compound containing an acrylamide structure having a cationic group and/or a carboxyl group may be a commercially available anionic, cationic, or amphoteric polyacrylamide product. In particular, papermaking chemicals such as a yield improver, a filterability improver, and a paper strength enhancer, which are internal additives for paper, can be used.

A copolymerized polyacrylamide of the papermaking chemical can obtain a function of imparting strength to a paper product by being fixed (adsorbed) to pulp. The addition of a paper strength enhancer improves the adhesive strength between cellulose fibers that make up paper during papermaking (Yasushi Takahata, Utilization of Synthetic Polymer in the Paper Industry. Part I, JAPAN TAPPI JOURNAL, 1973, Vol. 27, No. 12, p. 607). An amide group of a polyacrylamide resin is highly reactive and has a strong affinity with filler because of hydrogen bond, van der Waals force, and the like, so that the cohesive strength is excellent. Therefore, the amide moiety is a moiety that improves the paper strength. In the case of a compound containing an acrylamide structure having acrylamide such as (a) (meth)acrylamide, the adhesive composition of the present disclosure can also have the effect of improving the cohesive failure resistance in an adhesive layer between adhered fiber filaments, which is preferable.

When a polyacrylamide-based resin has a structure in which a branched structure is introduced through the action of a chain transfer substituent, it has many contact points with a base material such as fiber, which is considered to improve the affinity and adhesion and provide excellent adhesive performance. Further, despite its relatively high molecular weight, it is considered that, with the branched structure, the product has a high solid content and low viscosity, has excellent workability and drying properties, and exhibits a variety of distinctive performances without deteriorating the cohesive strength.

In addition, ionic groups of anionic group and cationic group function as fixing sites to pulp fibers. Due to the anionic nature of carboxyl group of anionic group, when (E) a polyvalent metal salt such as aluminum sulfate is added, the polyvalent metal salt functions as a fixing agent and fixes well to fibers. Cationic polymer electrolytes generally have inferior thermal stability compared to anionic and nonionic polymers, and because of their cationic nature, they are used as flocculants and for fixing on paper (Seishi MACHIDA, Some Problems on the Water-Soluble Polymers, SSOCJ Journal, 1975, Vol. 33, No. 3, p. 156).

Further, polyamide having an anionic group and a cationic group has an isoelectric point in a surface state with amphoteric properties of cationic group and anionic group due to hydrolysis of some amide bonds on the surface of polyamide resin or the like that is a nylon fiber material as an adherend in an example of the present disclosure.

Therefore, it is possible to study the use of amphoteric polyamide that has an isoelectric point near neutrality as a fixing agent on fiber surface for a compound that dyes or fixes to the surface. Further, the stickiness of latex can be suppressed by coating an anionic emulsifier of rubber latex with the cationic group of the amphoteric polyacrylamide, and dispersing it with the anionic group of the amphoteric polyamide.

Conventionally, in an adhesive composition containing resorcin and formaldehyde, resorcin and formaldehyde form a resole-type resorcin-formaldehyde condensate among rubber latex particles dispersed in an aqueous solvent, thereby obtaining adhesion to a fiber surface required for a fiber adhesive composition and workability in processes due to the following three effects (i), (ii), and (iii).
(i) The cohesive failure resistance is improved by improving the adhesive strength of an adhesive layer between fiber filaments to which the resole-type resorcin-formaldehyde condensate is adhered.

At the same time, (ii) a methylol group contained in the resole-type resorcin-formaldehyde condensate interacts with a hydroxyl group and the like in the resin to which it is adhered, thereby increasing its fixation to the fiber surface.

Further, (iii) a methylol group of the resol-type resorcin-formaldehyde condensate is added to a rosinate or the like used as an emulsifier and co-condensed on the surface of rubber latex in the adhesive composition. As a result, the stickiness of rubber latex is suppressed by coating by chemical cross-linking of formed phenolic resin.

On the other hand, although the mechanism of the adhesive composition of the present disclosure is different from that of the conventional adhesive composition containing resorcin and formaldehyde, the purpose of the adhesive composition of the present disclosure is to obtain effects that can substitute the above effects required for a fiber adhesive composition. That is, by adding the (B) compound containing an acrylamide structure having a cationic group and/or a carboxyl group, the adhesive strength of an adhesive layer between fiber filaments and the fixing properties on fiber surface are improved, and the adhesion between the adhesive and the adhered fiber can be improved, as described above.

Further, regarding the (iii) suppression of stickiness of rubber latex on the surface of rubber latex in the adhesive composition, the (B) compound containing an acrylamide structure having a cationic group and/or a carboxyl group coats the surface of the rubber latex having unsaturated diene because of the surface adsorption function of the (B) compound to form a composite with the rubber latex having unsaturated diene. This coating can provide an effect of suppressing the stickiness of the rubber latex having unsaturated diene.

When using these cationic polyacrylamides, care must be taken to avoid an increase in viscosity due to polymer aggregation and poor adsorption due to positive conversion of zeta potential if too many cationic groups are added. However, these cationic polyacrylamides are preferable in terms of the ability to fix themselves to the surface of latex or fiber base materials. When using anionic polyacrylamide, it should be noted that its ability to fix itself is relatively low at pH 7 or higher, but anionic polyacrylamide is preferable in terms of improving the dispersibility due to the repulsive force between rubber latex particles to suppress stickiness.

Among these, it is more preferable to use amphoteric polyacrylamide. The reason is as follows. Amphoteric polyacrylamide has the function of fixing to rubber latex and imparting repulsive force to rubber latex, and it also has the function of self-fixing even if there are too many cationic groups, so that the viscosity of the liquid hardly increases. Further, when an anionic group and a cationic group form an ionic complex within the molecule, the spreading of amphoteric polyacrylamide polymer chain is suppressed, and the polymer chains are accumulated more densely within a certain volume, resulting in an increase in cohesive failure resistance of the adhesive composition layer, which tends to increase the adhesive strength.

As a result, the adhesive composition of the present disclosure containing the (B) compound containing an acrylamide structure having a cationic group and/or a carboxyl group suppresses the stickiness of rubber latex that is measured as the mechanical stability of the adhesive liquid under shear strain, thereby suppressing the adhesion of the adhesive composition to a roll or the like in a process of coating an organic fiber cord with the adhesive composition and drying and heat curing, so that the workability is good.

In a process of coating an organic fiber cord surface and drying and heat curing, the adhesive composition layer is cured because of the cross-linking reaction of methylol group in the case of a conventional adhesive composition containing resorcin and formaldehyde. However, in the case of the (B) compound containing an acrylamide structure having a cationic group and/or a carboxyl group, the adhesiveness is improved because of charge interactions with polyacrylamide or dehydration condensation reaction.

The adhesive composition of the present disclosure can be chemically cross-linked by a sulfur cross-linking reaction during vulcanization of the (A) rubber latex having unsaturated diene. When the adhesive composition contains (C) an aqueous compound having a (thermal dissociative blocked) isocyanate group, the blocking agent of the (thermal dissociative blocked) isocyanate group of the (C) component dissociates, and the (B) compound containing an acrylamide structure having a cationic group and/or a carboxyl group chemically cross-links with the isocyanate group (NCO group) component, thereby improving the adhesion between an organic fiber and a coated rubber composition and the heat resistance.

The content of the (B) compound containing an acrylamide structure having a cationic group and/or a carboxyl group in the total solid content of the adhesive composition of the present disclosure is not particularly limited, but it is preferably 0.1 % by mass or more and preferably 25 % by mass or less. It is more preferably 0.2 % by mass or more and 15 % by mass or less, and still more preferably 0.4 % by mass or more and 8 % by mass or less.

When the content of the (B) compound containing an acrylamide structure having a cationic group and/or a carboxyl group is 0.05 % by mass or more, its function as an emulsifier leads to an effect of reducing the stickiness of rubber latex by coating on the rubber latex having unsaturated diene, and the effect becomes stable when the content is 0.2 % by mass or more. On the other hand, when the content of the (B) compound containing an acrylamide structure having a cationic group and/or a carboxyl group is 25 % by mass or more, the amount of (B) contained in the adhesive liquid is too large.

This is because, when the resin content in the voids between rubber latex particles is 25 % by mass or more, the amount of the (B) acrylamide coating having a cationic group and/or a carboxyl group that is fixed to the rubber latex increases, and the amount of rubber latex exposed on the adhesive layer surface to the adhered rubber component during vulcanization decreases.

When the content of the (B) compound containing an acrylamide structure having a cationic group and/or a carboxyl group is 15 % by mass or less, the ratio of a resin component serving as the skeleton of the adhesive layer with respect to a thermoplastic resin component without cross-linking reactive group such as polyacrylamide is too large, which may deteriorate the heat resistance of the adhesive layer.

When the content of the (B) compound containing an acrylamide structure having a cationic group and/or a carboxyl group is 8 % by mass, the (B) compound containing an acrylamide structure having a cationic group and/or a carboxyl group of the present disclosure appropriately functions as an agent that improves the adhesion of coating on rubber latex, the adhesion on a fiber resin surface, or the adhesion between components blended in the adhesive composition, and the amount of sulfur cross-linking or other cross-linking components in other rubber latex can be ensured.

The addition of the polyacrylamide deteriorates the strength and the heat resistance as compared to a conventional thermosetting compound obtained by condensing resorcin and formaldehyde. Although there are examples such as the one in JP 4810823 B (PTL 11), the number of the examples is small. Therefore, it is necessary to study the composition also containing other components such as a cross-linking agent, as in the present disclosure.

### <(C) Aqueous compound having (thermal dissociative blocked) isocyanate group, (D) polyphenol, and (E) polyvalent metal salt>

The adhesive composition of the present disclosure preferably further contains at least one compound selected from the group consisting of (C) an aqueous compound having a (thermal dissociative blocked) isocyanate group, (D) polyphenol, and (E) a polyvalent metal salt.

In the adhesive composition of the present disclosure, the (C) aqueous compound having a (thermal dissociative blocked) isocyanate group functions as a cross-linking agent and contributes to improving the adhesiveness between an organic fiber and a coated rubber composition, for example.

The (D) polyphenol has a function of improving the affinity between the adhesive composition and the organic fiber surface. As a result, the adhesiveness between an organic fiber and a coated rubber composition can be improved.

The (E) polyvalent metal salt has a function of improving fixation to the carboxyl group of the (B) compound containing an acrylamide structure having a cationic group and/or a carboxyl group, and to the anionic group such as a hydroxyl group on the surface of the adhered organic fiber. As a result, the adhesiveness between an organic fiber and a coated rubber composition can be improved.

Therefore, all of the (C) aqueous compound having a (thermal dissociative blocked) isocyanate group, (D) polyphenol, and (E) polyvalent metal salt contribute to improving the adhesiveness, for example, contribute to improving the adhesiveness between an organic fiber and a coated rubber composition.

### <(C) Aqueous compound having (thermal dissociative blocked) isocyanate group>

The (thermal dissociative blocked) isocyanate group of the (C) aqueous compound having a (thermal dissociative blocked) isocyanate group means a thermal dissociative blocked isocyanate group or an isocyanate group.
Specifically, the "(thermal dissociative blocked) isocyanate group" of the aqueous compound having a (thermal dissociative blocked) isocyanate group means a thermal dissociative blocked isocyanate group or isocyanate group, including
(i) a thermal dissociative blocked isocyanate group formed by the reaction of an isocyanate group with a thermal dissociative blocking agent for the isocyanate group,
(ii) an isocyanate group where the isocyanate group has not reacted with a thermal dissociative blocking agent for the isocyanate group,
(iii) an isocyanate group formed by dissociation of a thermal dissociative blocking agent from a thermal dissociative blocked isocyanate group, and
(iv) an isocyanate group.

The "aqueous" of the (C) aqueous compound having a (thermal dissociative blocked) isocyanate group indicates that it is water-soluble or water-dispersible. The "water-soluble" does not necessarily mean completely water-soluble, but also means that it is partially water-soluble, and it also means that phase separation will not occur in an aqueous solution of the adhesive composition.

The (C) aqueous compound having a (thermal dissociative blocked) isocyanate group is preferably (C-1) a water-dispersible (thermal dissociative blocked) isocyanate compound that contains an addition product of polyisocyanate having an aromatic ring and a blocking agent having at least one active hydrogen group (hereinafter, also simply referred to as "(C-1) component"). This case provides better adhesion between an organic fiber and a coated rubber composition when the adhesive composition is used on organic fibers.

For the (C-1) component, the active hydrogen group refers to a group containing hydrogen that becomes active hydrogen (atomic hydrogen (hydrogen radical) and hydride ion (hydride)) when placed under suitable conditions. Examples of the active hydrogen group include an amino group and a hydroxyl group.

The thermal dissociative blocking agent is not particularly limited if it is a blocking agent compound that protects the isocyanate group from any chemical reaction where the blocking agent can be dissociated by heat treatment as necessary to restore the isocyanate group. Specifically, it is preferably a thermal dissociation temperature at which the cross-linking reactivity of the isocyanate group, which is blocked by the thermal dissociative blocking agent and suppressed, can be recovered at the temperature of the heat treatment for heat curing after coating and drying the adhesive liquid in the process illustrated in FIG. 1.

Examples of the blocking agent include alcohol, phenol, active methylene, oxime, lactam, and amine. Specific examples thereof include, but are not limited to, lactams such as ε-caprolactam, δ-valerolactam, and γ-butyrolactam; phenols such as phenol, cresol, ethylphenol, butylphenol, octylphenol, nonylphenol, dinonylphenol, thiophenol, chlorphenol, and amylphenol; oximes such as methylethylketoxime, acetone oxime, acetophenone oxime, benzophenone oxime, and cyclohexanone oxime; alcohols such as methanol, ethanol, butanol, isopropyl alcohol, butyl alcohol, and cyclohexanol; malonic acid dialkyl esters such as dimethyl malonate and diethyl malonate; active methylenes such as methyl acetoacetate, ethyl acetoacetate, and acetylacetone, mercaptans such as butyl mercaptan and dodecyl mercaptan; amides such as acetanilide and acetic acid amide; imides such as succinimide, phthalic acid imide, and maleic acid imide; sulfites such as sodium bisulfite; cellosolves such as methyl cellosolve, ethyl cellosolve and butyl cellosolve; pyrazoles such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; amines such as dimethylamine, diethylamine, di-n-propylamine, diisopropylamine, dicyclohexylamine, diphenylamine, xylidine, N,N-diethylhydroxyamine, N,N'-diphenylformamidine, 2-hydroxypyridine, 3-hydroxypyridine, and 2-mercaptopyridine; and triazoles such as 1,2,4-triazole. A mixture of two or more of these may be used.

The blocking agent is preferably phenol, ε-caprolactam and ketoxime, which facilitates to obtain stable heat curing of the adhesive composition by thermal dissociation by heating.

Specifically, the (C-1) component includes aromatic polyisocyanates or aromatic aliphatic polyisocyanates. Examples of the aromatic isocyanates include phenylene diisocyanates such as m-phenylene diisocyanate and p-phenylene diisocyanate; tolylene diisocyanates such as 2,4-tolylene diisocyanate and 2,6-tolylene diisocyanate (TDI); diphenylmethane diisocyanates such as 2,4'-diphenylmethane diisocyanate, 4,4'-diphenylmethane diisocyanate (MDI), dialkyldiphenylmethane diisocyanate, and tetraalkyldiphenylmethane diisocyanate; polymethylene polyphenyl polyisocyanate (polymeric MDI); m- or p-isocyanatophenylsulfonyl isocyanates; diisocyanatobiphenyls such as 4,4'-diisocyanatobiphenyl and 3,3'-dimethyl-4,4'-diisocyanatobiphenyl; and naphthalene diisocyanates such as 1,5-naphthylene diisocyanate. Examples of the aromatic aliphatic polyisocyanates include xylylene diisocyanates such as m-xylylene diisocyanate, p-xylylene diisocyanate (XDI), and tetramethylxylylene diisocyanate; diethylbenzene diisocyanate; and α,α,α,α-tetramethylxylylene diisocyanate (TMXDI). Modified products such as carbodiimide, polyol and allophanate of the polyisocyanates are also included.

Among these polyisocyanates containing an aromatic ring in molecule, aromatic isocyanate is preferable, tolylene diisocyanate (TDI), diphenylmethane diisocyanate (MDI) or polymethylene polyphenyl polyisocyanate (polymeric MDI) are more preferable, and diphenylmethane diisocyanates (MDI) are particularly preferable, from the viewpoint of the cord focusing properties of the adhesive composition. When the (C-1) component is a block body of methylene diphenyl isocyanates, especially a block body of methylene diphenyl diisocyanate (diphenylmethane diisocyanate), better adhesion can be obtained between an organic fiber and a coated rubber composition when the adhesive composition is used on organic fibers.

Further, the (C) aqueous compound having a (thermal dissociative blocked) isocyanate group is more preferably (C-2) an aqueous urethane compound having a (thermal dissociative blocked) isocyanate group (hereinafter, also simply referred to as "(C-2) component"). This case provides better adhesion between an organic fiber and a coated rubber composition when the adhesive composition is used on organic fibers. The details of the (C-2) component will be described later.

The content (solid content) of the (C) aqueous compound having a (thermal dissociative blocked) isocyanate group in the total solid content of the aqueous adhesive composition is not particularly limited. However, it is preferably 5 % by mass or more, more preferably 10 % by mass or more, and still more preferably 15 % by mass or more. Further, the content of the (C) aqueous compound having a (thermal dissociative blocked) isocyanate group is preferably 70 % by mass or less, more preferably 60 % by mass or less, still more preferably 45 % by mass or less, and particularly preferably 35 % by mass or less. The reason is as follows. When the content of the (C) aqueous compound having a (thermal dissociative blocked) isocyanate group is 5 % by mass or more, the adhesion between an organic fiber and a coated rubber composition can be improved. When the content of the (C) aqueous compound having a (thermal dissociative blocked) isocyanate group is 70 % by mass or less, it is possible to relatively secure a certain amount or more of other components such as rubber latex blended in the adhesive composition, which improves the adhesiveness to rubber as an adherend.

In a conventional adhesive composition containing resorcin and formaldehyde, a sea-island structure is formed in which rubber latex particles (like islands) are dispersed in a phenolic resin (like the sea) in which the resorcin and formaldehyde are co-condensed, thereby obtaining good adhesion between an organic fiber and a phenolic resin covering the organic fiber surface.

On the other hand, in one preferred embodiment of the adhesive composition of the present disclosure, the (C) aqueous compound having a (thermal dissociative blocked) isocyanate group acts as an adhesion promoter because of the following two functional effects (x) and (y), instead of the phenolic resin in which the resorcin and formaldehyde are co-condensed.
As a result, in the adhesive composition, the (C) aqueous compound having a (thermal dissociative blocked) isocyanate group contributes to good adhesion between an organic fiber and a coated rubber composition.

(x) A functional effect where the aqueous compound is distributed at a position near the interface between an organic fiber and an adhesive layer of the adhesive composition, so that the adhesion between the organic fiber and the adhesive layer is promoted.

(y) A functional effect where in the adhesive layer of the adhesive composition, a three-dimensional network structure is formed by cross-linking of the isocyanate group by the compound having a (thermal dissociative blocked) isocyanate group, so that the adhesive layer is reinforced.

An example of the principles of the above-described (x) and (y), which are the two functional effects of the (C) aqueous compound having a (thermal dissociative blocked) isocyanate group as an adhesion promoter, in one embodiment of the adhesive composition of the present disclosure will be described in detail.

### Regarding the functional effect of (x) as adhesion promoter

A polyester synthetic resin material such as polyethylene terephthalate, which is widely used as an organic fiber, contains a flat linear polymer chain. The surface of the polymer chain or the gaps of the polymer chain has a π-electron atmosphere derived from the aromatics and the like contained in the polymer chain. Further, polyester has a particularly small number of hydroxyl groups on the surface as compared with 6,6-nylon.

Therefore, conventionally, an adhesive composition used for an organic fiber made of polyester has contained molecules having a planar structure having an aromatic ring with aromatic π electrons on the side surface (a part that easily diffuses into the organic fiber) as an adhesion promoter for the purposes that the adhesive composition is dispersed into the gaps of the organic fiber polymer chain to obtain sufficient adhesiveness, and that an adhesive layer of the adhesive composition adheres to the organic fiber polymer chain surface.

### Regarding the functional effect of (y) as adhesion promoter

In an adhesive layer containing the component (C-1), a covalent bond is formed by isocyanate cross-linking between a hydroxyl group of the (B) compound containing an acrylamide structure having a cationic group and/or a carboxyl group contained in the adhesive composition, and isocyanate from which a blocking agent has been dissociated by heat treatment, and this can strengthen the adhesion by the adhesive composition, as described above.

The particle size of the (C-1) component is preferably 0.01 µm to 0.50 µm as described above. This is because when the particle size of the (C-1) component is 0.50 µm or less, the problem that the (C-1) component precipitates in liquid to cause non-uniform diffusion in the adhesive layer is less likely to occur as the particle size decreases.
On the other hand, when it is (C-2) an aqueous urethane compound having a (thermal dissociative blocked) isocyanate group, the water solubility is increased. As a result, the components in the adhesive composition liquid hardly precipitate, non-uniform diffusion of the components hardly occurs even if it is stored stationary, and the adhesion state is stable over time, which is preferable.

### ((Thermal dissociative blocking agent and aqueous urethane compound))

The thermal dissociative blocking agent of the (C-2) component is not particularly limited if it is a blocking agent compound that protects the isocyanate group from any chemical reaction where the blocking agent can be dissociated by heat treatment as necessary to restore the isocyanate group. Specific examples of the thermal dissociative blocking agent include the same compounds mentioned above as the blocking agent for the (C-1) component. Preferable examples thereof include phenols such as phenol, thiophenol, chlorphenol, cresol, resorcinol, p-sec-butylphenol, p-tertbutylphenol, p-sec-amylphenol, p-octylphenol, and p-nonylphenol; secondary or tertiary alcohols such as isopropyl alcohol and tert-butyl alcohol; aromatic secondary amines such as diphenylamine and xylidine; phthalic acid imides; lactams such as δ-valerolactam; caprolactams such as ε-caprolactam; malonic acid dialkyl esters such as diethyl malonate and dimethyl malonate, active methylene compounds such as acetylacetone and acetoacetic acid alkyl ester; oximes such as acetone oxime, methyl ethyl ketoxime, and cyclohexanone oxime; and basic nitrogen compounds and acid sodium sulfites such as 3-hydroxypyridine, 1,2-pyrazole, 3,5-dimethylpyrazole, 1,2,4-triazole, diisopropylamine, and N,N'-diphenylformamidine.

Among these blocking agents, phenol, ε-caprolactam and ketoxime, which facilitates stable heat curing of the adhesive composition by thermal dissociation by heating, can be suitably used.

The "aqueous" of the aqueous urethane compound indicates that it is water-soluble or water-dispersible. The water-soluble does not necessarily mean completely water-soluble, but also means that it is partially water-soluble, and it also means that phase separation will not occur in the aqueous solution of the adhesive composition.

The urethane compound of the aqueous urethane compound is a compound having a covalent bond formed between nitrogen of an amine and carbon of a carbonyl group, and it refers to a compound represented by the following general formula (3).

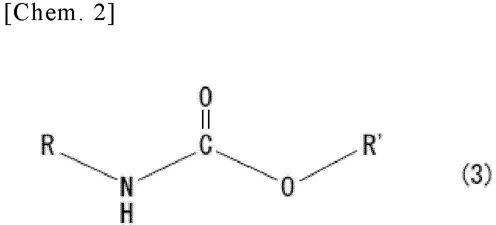

In the formula (3), R and R' represent a hydrocarbon group.

The molecular weight of the (C-2) aqueous urethane compound having a (thermal dissociative blocked) isocyanate group is not particularly limited if the compound is water-based. However, the number average molecular weight is preferably 1,500 to 100,000. The number average molecular weight is particularly preferably 9,000 or less.

As described above, a method of synthesizing the (C-2) component is not particularly limited, and a known method such as the method described in JP S63-51474 A may be used.

A preferred embodiment of the (C-2) component is a reaction product obtained by mixing (α), (β), (γ) and (δ) at a specified mixing ratio and reacting them, where (α) is an organic polyisocyanate compound having 3 or more and 5 or less functional groups and having a number average molecular weight of 2,000 or less, (β) is a compound having 2 or more and 4 or less active hydrogen groups and having a number average molecular weight of 5,000 or less, (γ) is a thermal dissociative blocking agent, and (δ) is a compound having at least one active hydrogen group and at least one anionic, cationic, or nonionic hydrophilic group, and when the molecular weight of the isocyanate group (-NCO) is 42, the composition ratio of the (thermal dissociative blocked) isocyanate group in the reaction product is 0.5 % by mass or more and 11 % by mass or less. This case provides better adhesion between an organic fiber and a coated rubber composition when the adhesive composition is used on organic fibers. In this case, the (C-2) component has both a (thermal dissociative blocked) isocyanate group moiety and a hydrophilic moiety having a hydrophilic group, so that the self-water solubility of the urethane compound is increased.

The mixing ratio of (α) is 40 % by mass or more and 85 % by mass or less, the mixing ratio of (β) is 5 % by mass or more and 35 % by mass or less, the mixing ratio of (γ) is 5 % by mass or more and 35 % by mass or less, and the mixing ratio of (δ) is 5 % by mass or more and 35 % by mass or less with respect to the total amount of (α), (β), (γ) and (δ).

The (α) organic polyisocyanate compound having 3 or more and 5 or less functional groups and having a number average molecular weight of 2,000 or less is not particularly limited. However, it is preferably an aromatic polyisocyanate compound and an oligomer thereof, and it may be other aliphatic, alicyclic, or heterocyclic polyisocyanate compound and an oligomer thereof. This is because the (C-2) component obtained as a reaction product after reacting the (α) organic polyisocyanate compound having 3 or more and 5 or less functional groups and having a number average molecular weight of 2,000 or less as described above is easier to disperse into the gaps of the organic fiber polymer chain.

Specific examples thereof include, as an aliphatic polyisocyanate compound, ethylene diisocyanate, 1,4-tetramethylene diisocyanate, 1,6-hexamethylene diisocyanate, 1,12-dodecane diisocyanate, 2,2,4-trimethylhexamethylene diisocyanate, 2,4,4-trimethylhexamethylene diisocyanate, dimer acid diisocyanate, and lysine diisocyanate, as an alicyclic polyisocyanate compound, cyclobutane-1,3-diisocyanate, cyclohexane-1,3-diisocyanate, cyclohexane-1,4-diisocyanate, isophorone diisocyanate, 4,4'-methylenebis (cyclohexylisocyanate), methylcyclohexane-2,4-diisocyanate, methylcyclohexane-2,6-diisocyanate, and 1,3-(isocyanatomethyl) cyclohexane, as a heterocyclic polyisocyanate compound, tolylene diisocyanate adduct of 1,3,5-tris (2'-hydroxyethyl) isocyanuric acid, as an aromatic polyisocyanate compound, m-phenylene diisocyanate, p-phenylene diisocyanate, 2,4-tolylene diisocyanate, 2,6-tolylene diisocyanate, m-xylylene diisocyanate, p-xylylene diisocyanate, 2,4'-diphenylmethane diisocyanate, 4,4'-diphenylmethane diisocyanate, m-tetramethylxylylene diisocyanate, p-tetramethylxylylene diisocyanate, methine tris(4-phenylisocyanate), tris (4-isocyanatophenyl) methane, tris thiophosphate (4-isocyanatophenyl ester), 3-isopropenyl-α',α'-dimethylbenzyl isocyanate and oligomer mixtures thereof, and modified products such as carbodiimides, polyols and allophanates of these polyisocyanate compounds.

Among the above, an aromatic polyisocyanate compound is preferable, and methylenediphenyl polyisocyanate, polyphenylene polymethylene polyisocyanate and the like are particularly preferable. Polyphenylene polymethylene polyisocyanate having a number average molecular weight of 2,000 or less is preferable, and polyphenylene polymethylene polyisocyanate having a number average molecular weight of 1,000 or less is particularly preferable. This is because the (C-2) component obtained as a reaction product after reacting the (α) organic polyisocyanate compound having 3 or more and 5 or less functional groups and having a number average molecular weight of 2,000 or less as described above is easier to disperse into the gaps of the organic fiber polymer chain.

The (β) compound having 2 or more and 4 or less active hydrogen groups and having a number average molecular weight of 5,000 or less is not particularly limited. Specific examples thereof include compounds selected from the group consisting of the following (i) to (vii),
(i) polyhydric alcohols having 2 or more and 4 or less hydroxyl groups and having a number average molecular weight of 5,000 or less,
(ii) multivalent amines having 2 or more and 4 or less primary and/or secondary amino groups and having a number average molecular weight of 5,000 or less,
(iii) amino alcohols having 2 or more and 4 or less primary and/or secondary amino groups and hydroxyl groups and having a number average molecular weight of 5,000 or less,
(iv) polyester polyols having 2 or more and 4 or less hydroxyl groups and having a number average molecular weight of 5,000 or less,
(v) polybutadiene polyols having 2 or more and 4 or less hydroxyl groups and having a number average molecular weight of 5,000 or less, and copolymers thereof with other vinyl monomers,
(vi) polychloroprene polyols having 2 or more and 4 or less hydroxyl groups and having a number average molecular weight of 5,000 or less, and copolymers thereof with other vinyl monomers, and
(vii) polyether polyols having 2 or more and 4 or less hydroxyl groups and having a number average molecular weight of 5,000 or less,
   which is multivalent amine, C2-C4 alkylene oxide heavy adduct of polyhydric phenol and amino alcohols, C2-C4 alkylene oxide heavy adduct of C3 or higher polyhydric alcohols, C2-C4 alkylene oxide copolymer, or C3-C4 alkylene oxide polymer.

For the (C-2) component, the active hydrogen group refers to a group containing hydrogen that becomes active hydrogen (atomic hydrogen (hydrogen radical) and hydride ion (hydride)) when placed under suitable conditions. Examples of the active hydrogen group include an amino group and a hydroxyl group.

The compound having at least one active hydrogen group and at least one anionic hydrophilic group of the "(δ) compound having at least one active hydrogen group and at least one anionic, cationic, or nonionic hydrophilic group" is not particularly limited. Examples thereof include aminosulfonic acids such as taurine, N-methyltaurine, N-butyltaurine and sulfanilic acid, and aminocarboxylic acids such as glycine and alanine.

A method of synthesizing the (C-2) component by mixing and reacting the above-described (α), (β), (γ) and (δ) is not particularly limited, and a known method such as the method described in JP S63-51474 A may be used.

Another preferred embodiment of the (C-2) component is a reaction product obtained by mixing (α), (β), (γ), (δ) and (ε) at a specified mixing ratio and reacting them, where (α) is an organic polyisocyanate compound having 3 or more and 5 or less functional groups and having a number average molecular weight of 2,000 or less, (β) is a compound having 2 or more and 4 or less active hydrogen groups and having a number average molecular weight of 5,000 or less, (γ) is a thermal dissociative blocking agent, (δ) is a compound having at least one active hydrogen group and at least one anionic, cationic, or nonionic hydrophilic group, and (ε) is a compound containing an active hydrogen group other than (α), (β), (γ) and (δ), and when the molecular weight of the isocyanate group (-NCO) is 42, the composition ratio of the (thermal dissociative blocked) isocyanate group in the reaction product is 0.5 % by mass or more and 11 % by mass or less. In this case, the (C-2) component has both a (thermal dissociative blocked) isocyanate group moiety and a hydrophilic moiety having a hydrophilic group, so that the self-water solubility of the urethane compound is increased.

The mixing ratio of (α) is 40 % by mass or more and less than 85 % by mass, the mixing ratio of (β) is 5 % by mass or more and 35 % by mass or less, the mixing ratio of (γ) is 5 % by mass or more and 35 % by mass or less, the mixing ratio of (δ) is 5 % by mass or more and 35 % by mass or less, and the mixing ratio of (ε) is more than 0 % by mass and 45 % by mass or less with respect to the total amount of (α), (β), (γ), (δ) and (ε).

As used herein, the (α) organic polyisocyanate compound having 3 or more and 5 or less functional groups and having a number average molecular weight of 2,000 or less, the (β) compound having 2 or more and 4 or less active hydrogen groups and having a number average molecular weight of 5,000 or less, the (γ) thermal dissociative blocking agent, and the (δ) compound having at least one active hydrogen group and at least one anionic, cationic, or nonionic hydrophilic group, except for the mixing ratio, are as described in the above <<Preferred embodiment of (C-2) aqueous urethane compound having a (thermal dissociative blocked) isocyanate group>>.

A method of synthesizing the (C-2) component by mixing and reacting the above-described (α), (β), (γ), (δ) and (ε) is not particularly limited, and a known method such as the method described in JP S63-51474 A may be used.

Yet another preferred embodiment of the (C-2) component is represented by the following general formula (1), 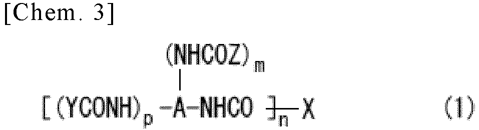 [where
A is a residue of an organic polyisocyanate compound from which an active hydrogen group has been eliminated,
X is a residue of a polyol compound having 2 or more and 4 or less hydroxyl groups and having a number average molecular weight of 5,000 or less from which an active hydrogen group has been eliminated,
Y is a residue of a thermal dissociative blocking agent from which an active hydrogen group has been eliminated,
Z is a residue of a compound having at least one active hydrogen group and at least one salt-producing group or hydrophilic polyether chain, from which an active hydrogen group has been eliminated,
n is an integer of 2 or more and 4 or less, and
p + m is an integer of 2 or more and 4 or less (m ≥ 0.25)]. This case provides better adhesion between an organic fiber and a coated rubber composition when the adhesive composition is used on organic fibers. In this case, the (C-2) component has both a (thermal dissociative blocked) isocyanate group moiety and a hydrophilic moiety having a hydrophilic group, so that the self-water solubility of the urethane compound is increased.

In the formula (1), the organic polyisocyanate compound of A, which is a residue of an organic polyisocyanate compound from which an active hydrogen group has been eliminated, preferably contains an aromatic ring. In this case, the (C-2) component is easier to disperse into the gaps of the organic fiber polymer chain.

Specific examples thereof include, but are not limited to, methylenediphenyl polyisocyanate and polyphenylene polymethylene polyisocyanate. Polyphenylene polymethylene polyisocyanate having a number average molecular weight of 6,000 or less is preferable, and polyphenylene polymethylene polyisocyanate having a number average molecular weight of 4,000 or less is particularly preferable.

In the formula (1), the polyol compound having 2 or more and 4 or less hydroxyl groups and having a number average molecular weight of 5,000 or less of X, which is a residue of a polyol compound having 2 or more and 4 or less hydroxyl groups and having a number average molecular weight of 5,000 or less from which an active hydrogen group has been eliminated, is not particularly limited. Specific examples thereof include compounds selected from the group consisting of the following (i) to (vi),
(i) polyhydric alcohols having 2 or more and 4 or less hydroxyl groups and having a number average molecular weight of 5,000 or less,
(ii) amino alcohols having 2 or more and 4 or less primary and/or secondary amino groups and hydroxyl groups and having a number average molecular weight of 5,000 or less,
(iii) polyester polyols having 2 or more and 4 or less hydroxyl groups and having a number average molecular weight of 5,000 or less,
(iv) polybutadiene polyols having 2 or more and 4 or less hydroxyl groups and having a number average molecular weight of 5,000 or less, and copolymers thereof with other vinyl monomers,
(v) polychloroprene polyols having 2 or more and 4 or less hydroxyl groups and having a number average molecular weight of 5,000 or less, and copolymers thereof with other vinyl monomers, and
(vi) polyether polyols having 2 or more and 4 or less hydroxyl groups and having a number average molecular weight of 5,000 or less,
   which is multivalent amine, C2-C4 alkylene oxide heavy adduct of polyhydric phenol and amino alcohols, C2-C4 alkylene oxide heavy adduct of C3 or higher polyhydric alcohols, C2-C4 alkylene oxide copolymer, or C3-C4 alkylene oxide polymer.

The (C-2) component is not particularly limited, and commercially available products such as ELASTRON BN27, BN77, and BN11 manufactured by DKS Co. Ltd. can be used, among which ELASTRON BN77 is preferred.

### <(D) Polyphenol>

An embodiment of the adhesive composition of the present disclosure can also contain (D) polyphenol in addition to the (A) rubber latex having unsaturated diene and the (B) compound containing an acrylamide structure having a cationic group and/or a carboxyl group.

The (D) polyphenol is preferably a plant-derived compound having a plurality of phenolic hydroxy groups in molecule. This case provides better adhesion between an organic fiber and a coated rubber composition when the adhesive composition is used on organic fibers. Specific examples of the (D) polyphenol include lignin, tannin, tannic acid, flavonoid, and derivatives thereof. This case also provides better adhesion between an organic fiber and a coated rubber composition when the adhesive composition is used on organic fibers.

Although studies have been conducted for a long time to separate polyphenols such as lignin and tannin that are components in wood and bark and react them with formaldehyde to produce adhesives (for example, see JP H07-53858 A), there is little knowledge of producing aqueous adhesive compositions containing no resorcin.

The (D) polyphenol is preferably lignin or a derivative thereof. Lignin, along with polysaccharides such as cellulose, is a major component of plant cell walls. Lignin includes, for example, functional groups such as a hydroxyl group, a methoxy group, a carbonyl group and a carboxyl group, and particularly, the phenolic hydroxy group can interact with a substance having a cationic group because it is highly reactive.

Lignin is a polymer with a structure based on phenylpropane, but its molecular structure has not yet been completely elucidated because lignin has a variety of molecular structures and it is a huge biopolymer with a three-dimensional network structure.

Since natural lignin forms a strong composite material with polysaccharides such as cellulose in plant cell walls, it is extremely difficult to isolate natural lignin without modifying its chemical structure. Various industrial separation methods are used to extract lignin from materials such as wood. Examples of the lignin obtained after separation include sulfonic acid lignin, kraft lignin, soda lignin, and steam-blasted lignin. Among these industrially handled lignin, lignin obtained on a large scale from pulp waste liquid of chemical pulping in the paper pulp manufacturing process, that is, lignosulfonates or kraft lignin, is a well-known material from the viewpoint of availability and economy.

Examples of other lignins include lignin modified by hydroxymethylation, epoxidation, denitrification, acylation or hydroxylation, diethanolamine-modified lignin, enzyme-modified lignin, laccase-modified lignin, urea-modified lignin, lignosulfonate, alkali cellulose-method lignin, alkali granite-method lignin, and polyethylene glycol-added lignin.

The kraft lignin is lignin obtained with a chemical pulping method (high-temperature and high-pressure reaction) called kraft cooking method that is a high-temperature and high-pressure reaction, where wood chips of broadleaf trees, conifers, miscellaneous trees, bamboo, kenaf, bagasse and the like as raw material wood are put into a digester together with a cooking solution made of sodium hydroxide/sodium sulfide and the like. Acid and/or carbon dioxide is added to the kraft waste liquid obtained after kraft cooking to precipitate dissolved lignin modified products, and then the obtained precipitate is dehydrated and washed to obtain the kraft lignin. Further, the precipitate after dehydration and washing can be subjected to refining where an organic solvent such as alcohol or acetone is added to dissolve the precipitate to separate insoluble impurities and then drying is performed, or to modification where various functional groups are introduced as necessary. The kraft lignin may be a commercially available product, among which the reagent "Lignin, alkali, kraft" (CAS Number: 8068-05-1) manufactured by Sigma-Aldrich Co. LLC is preferred.

In the chemical pulping method of sulfite cooking method in which wood chips are reacted with a cooking solution of sulfurous acid and/or sulfites at high temperature and high pressure, the sulfonic acid lignin is lignin sulfonic acid and its salts obtained from the waste liquid and the like eluted from sulfite pulp, and particularly preferred examples thereof include calcium lignin sulfonate, sodium lignin sulfonate, potassium lignin sulfonate, and magnesium lignin sulfonate. Among the above, sodium lignin sulfonate and the like are preferred. These sulfonic acid lignins are available as commercial products. For example, a lignin sulfonate or a modified lignin sulfonate may be the SAN X series manufactured by Nippon Paper Industries Co., Ltd.

Examples of a high value-added lignin sulfonate include a high-purity product, and a partially de(low) sulfonated lignin sulfonate whose degree of sulfonation has been reduced by heating a lignin sulfonate in an alkaline aqueous solution using sodium hydroxide or ammonia in the presence of an oxidizing agent such as oxygen (for example, see JP 2016-135834 A). A high-purity lignin sulfonate or modified lignin sulfonate may be the PEARLLEX series manufactured by Nippon Paper Industries Co., and a partially desulfonated lignin sulfonic acid may be the VANILLEX series manufactured by Nippon Paper Industries Co. Among these, the reagent "Lignin (alkali)" (CAS Number: 8061-51-6, solid powder) manufactured by Tokyo Chemical Industry Co., Ltd. (TCI) that is a partially de(low) sulfonated lignin sulfonate with a reduced degree of sulfonation is preferred.

The tannin is a group of polyphenolic compounds that are present in a wide range of plants, not only in woody trees, but also in fruits, leaves and seeds, such as grapes, persimmons, berries, cloves, legumes, medicinal herbs, tea leaves and cocoa beans. Tannin molecules generally contain a large number of hydroxyl groups and often also carboxyl groups and tend to form strong complexes and composites with a wide range of macromolecules.

The tannin includes tannic acid, proanthocyanidin, flavonoid, gallic acid ester, catechin, and the like, and it also includes salts thereof and derivatives thereof such as modified products. The flavonoid is ubiquitous in the leaves, stems, and barks of plants and is a substance generally called tannin that includes hydrolyzable tannin and condensed tannin. The identification of these tannins is as follows. When it is boiled in dilute hydrochloric acid, condensed tannin forms insoluble precipitates, and hydrolyzable tannin hydrolyzes to form water-soluble substances.

The tannin, both hydrolyzable tannin and condensed tannin, is water-soluble and can be obtained by extraction from plant materials such as wood, bark, leaves, fruits, pods, and insect galls by hot water extraction or other methods. For example, hydrolyzable tannin can be obtained from the wood of chestnuts and nuts, the bark of oak, tea leaves, nutgalls, and gallnuts, and condensed tannin can be obtained from the wood of quebracho, the bark of mimosa, and the seeds of persimmon and buckwheat. Among the above, the hydrolyzable tannin is preferably the reagent "Tannic acid" (CAS Number: 1401-55-4-6, solid powder) manufactured by NACALAI TESQUE, INC., which is a tannic acid obtained from nutgalls and the like, and the condensed tannin is preferably the product "Mimosa" (solid powder) manufactured by Kawamura Corporation, which is obtained from the bark of mimosa.

The content (solid content) of the (D) polyphenol in the total solid content of the aqueous adhesive composition is not particularly limited. However, it is preferably 1 % by mass or more, more preferably 1.5 % by mass or more, and even more preferably 3 % by mass or more. Further, the content of the (D) polyphenol is preferably 50 % by mass or less, more preferably 30 % by mass or less, even more preferably 25 % by mass or less, and particularly preferably 20 % by mass or less. The reason is as follows. When the content of the (D) polyphenol is 0.5 % by mass or more, the adhesiveness between an organic fiber and a coated rubber composition can be improved. When the content of the (D) polyphenol is 50 % by mass or less, it is possible to relatively secure a certain amount or more of other components such as rubber latex blended in the adhesive composition, which improves the adhesiveness to rubber as an adherend.

### <(E) Polyvalent metal salt>

One embodiment of the adhesive composition of the present disclosure may also contain (E) a polyvalent metal salt in addition to the (A) rubber latex having unsaturated diene and the (B) compound containing an acrylamide structure having a cationic group and/or a carboxyl group.

The (E) polyvalent metal salt is a component for promoting fixation to a surface when adhering an adhesive layer of the adhesive composition to an organic fiber as an adherend. The polyvalent metal salt is adsorbed as cation to an anionic group such as a hydroxyl group on the surface of the organic fiber as an adherend, and it can realize interactions between the polyacrylamide contained in the adhesive composition and an amide moiety having hydrogen bonding force or an anionic group contained therein. As a result of this fixation promoting effect, the adhesive composition of the present disclosure containing the (E) polyvalent metal salt can, for example, provide good adhesion between an organic fiber cord and a coated rubber composition.

The (E) polyvalent metal salt is not limited, and as described above, a divalent or higher metal ion salt that can be fixed on an organic fiber surface can be used. For example, an inorganic filler used as a fixing agent for paper fibers in a papermaking chemical, a mordant used as a dyeing chemical for fibers, or the like can be preferably used. These may be used alone or in combination of two or more.

When the (E) polyvalent metal salt is an inorganic filler used as a fixing agent for paper fibers in a papermaking chemical, specific examples thereof include calcium carbonate, clay, talc, gypsum, titanium dioxide, synthetic silicates, aluminum trihydrate, barium sulfate, and magnesium oxide. Among the above, calcium carbonate that can be used under neutral to weakly alkaline conditions with a pH of about 6.0 to 8.5 is preferred.

Examples of the mordant used as a dyeing chemical for fibers include tetracoordinated or hexacoordinated polyvalent metal ions, and specifically, inorganic salts of aluminum ions, iron ions, chromium ions, copper ions, tin ions and nickel ions that are iron chloride, tin chloride, alum, copper sulfate, copper acetate, copper oxalate, copper gluconate, aluminum acetate, or natural mordants such as mordants made with iron or lye containing these polyvalent metal ions. In the present disclosure, copper gluconate that is an additive for nutritionally functional food for copper supplementation is used.

When the (E) polyvalent metal salt is an inorganic filler, for example, a liquid obtained by pulverizing a polyvalent metal salt and dispersing or dissolving it in water is added to the adhesive composition of the present disclosure. Taking calcium carbonate as an example, a filler having an average particle size of 0.1 µm to 30 µm, such as heavy calcium carbonate obtained by pulverizing limestone, or chalk from light calcium carbonate or marine microorganisms like foraminifera, can be stirred and dispersed in water to obtain a suspension of 5 % by mass to 30 % by mass, and the suspension can be used.

The mordant can be used as an aqueous solution of about 0.01 % by mass to 5 % by mass obtained by dissolving the mordant in water with stirring. When the mordant is mixed with the (B) compound containing an acrylamide structure having a cationic group and/or a carboxyl group and the (D) polyphenol, fine polyion complexes may be formed in the mixed aqueous solution, and it is preferable to appropriately adjust the amount of the mordant by reducing the amount added or reducing the concentration so that sedimentation does not occur.

The content (solid content) of the (E) polyvalent metal salt in the total solid content of the adhesive composition is not particularly limited. However, it is preferably 0.01 % by mass or more, more preferably 0.05 % by mass or more, and even more preferably 0.1 % by mass or more. Further, the content of the (E) polyvalent metal salt is preferably 3 % by mass or less, more preferably 2 % by mass or less, and even more preferably 1.5 % by mass or less. The reason is as follows. When the content of the (E) polyvalent metal salt is 0.01 % by mass or more, the adhesion between an organic fiber and a coated rubber composition can be improved. When the content of the (E) polyvalent metal salt is 3 % by mass or less, an increase in the viscosity caused by the cohesive effect of the adhesive composition due to the polyvalent metal salt can be suppressed.

### <Method of producing adhesive composition>

When producing the adhesive composition of the present disclosure, the (A) rubber latex having unsaturated diene and the (B) compound containing an acrylamide structure having a cationic group and/or a carboxyl group are mixed, and further, the (C) aqueous compound having a (thermal dissociative blocked) isocyanate group, the (D) polyphenol, and the (E) polyvalent metal salt can be mixed in any order.

When the (E) polyvalent metal salt is contained, although not particularly limited, the preferred order of addition is: the (E) polyvalent metal salt, the (D) polyphenol, the (B) compound containing an acrylamide structure having a cationic group and/or a carboxyl group, the (A) rubber latex having unsaturated diene, and the (C) aqueous compound having a (thermal dissociative blocked) isocyanate group.

The reason is as follows. The (E) polyvalent metal salt is mixed as a fixing agent for compounds having anionic groups, such as the (D) polyphenol and the (B) compound containing an acrylamide structure having a cationic group and/or a carboxyl group to form a polyion complex, so that it is easier to fix to an anionic group on the surface of an organic fiber as an adherend and an anionic group of an emulsifier on the surface of rubber latex.

In the adhesive composition of the present disclosure, the mixing mass ratio [(A): (B)] (in terms of solid content) of the (A) rubber latex having unsaturated diene and the (B) compound containing an acrylamide structure having a cationic group and/or a carboxyl group is not particularly limited, but it is preferably in a range of 100: 0.1 to 100: 25 and more preferably in a range of 100: 0.2 to 100: 15.

The reason is as follows. When the mixing mass ratio is 100: 0.1 or more (when the ratio value is 1000 or less), a film of microcapsule of the (B) compound containing an acrylamide structure having a cationic group and/or a carboxyl group can be formed around the (A) rubber latex having unsaturated diene as a core, and it is possible to obtain an adhesive layer with sufficient strength. When the mixing mass ratio is 100: 25 or less (when the ratio value is 4 or more), a film of microcapsule of the (B) compound containing an acrylamide structure having a cationic group and/or a carboxyl group formed around the (A) rubber latex having unsaturated diene as a core is not too thick, so that when a coated rubber composition, which is an adherend of an organic fiber, and the adhesive composition are co-vulcanized and adhered to each other, the coated rubber composition as the adherend and the (A) rubber latex having unsaturated diene are compatible with each other. As a result, the initial process of adhesion between the coated rubber composition as the adherend and the adhesive composition progresses smoothly.

When mixing the (A) rubber latex having unsaturated diene and the (B) compound containing an acrylamide structure having a cationic group and/or a carboxyl group, a known water-soluble material that can strengthen the film of the (B) compound containing an acrylamide structure having a cationic group and/or a carboxyl group can be used in combination in common coacervate. For example, gum arabic, carrageenan, CMCs, organic salts, or an electrolyte material consisting of inorganic salts other than the (E) polyvalent metal salt, such as salts with cations that are monovalent like sodium chloride, potassium chloride and ammonium chloride, and salts with anions like sulfates, phosphates, carbonates and acetates, can be used. Further, a liquid material that is water-soluble liquid and in which a film-forming material is less soluble than water, such as an alcohols like ethanol or propanol, or water-soluble polymers like an isobutylene-maleic anhydride ring-opening copolymer salt, can also be used.

In the adhesive composition of the present disclosure, a mixing mass ratio [(A): [(C)+(D)+(E)] (in terms of solid content) of the (A) rubber latex having unsaturated diene to compounds selected from the group consisting of the (C) aqueous compound having a (thermal dissociative blocked) isocyanate group, the (D) polyphenol and the (E) polyvalent metal salt is not particularly limited, but it is preferably in a range of 100: 5 to 100: 300, more preferably in a range of 100: 7 to 100: 150, and still more preferably in a range of 100: 10 to 100: 60.

The reason is as follows. When the mixing mass ratio is 100: 5 or more (when the ratio value is 20 or less), the ratio of the (A) rubber latex having unsaturated diene in the adhesive composition is not too large, an adhesive layer of the adhesive composition can maintain sufficient fracture resistance, and deterioration of adhesiveness under strain can be prevented. When the mixing mass ratio is 100: 300 or less (when the ratio value is 1/3 or more), the ratio of the (A) rubber latex having unsaturated diene in the adhesive composition is not too low, so that when a coated rubber composition, which is an adherend of an organic fiber, and the adhesive composition are co-vulcanized and adhered to each other, the coated rubber composition as the adherend and the (A) rubber latex are compatible with each other. As a result, the adhesion between the coated rubber composition as the adherend and the adhesive composition is sufficiently improved.

The (A) rubber latex having unsaturated diene, the (B) compound containing an acrylamide structure having a cationic group and/or a carboxyl group, the (C) aqueous compound having a (thermal dissociative blocked) isocyanate group, the (D) polyphenol, and the (E) polyvalent metal salt are preferably aqueous. In this case, water that causes less environmental pollution can be used as a solvent.

### [Organic fiber]

By coating the adhesive composition with the composition described above on the surface of an organic fiber, such as an organic fiber made of polyester resin, aromatic polyamide resin, acrylic resin, or the like, and performing moderate heat treatment, an adhesive layer of the adhesive composition is coated on the surface of the resin base material, thereby obtaining an organic fiber material that has been subjected to adhesive treatment.

In the organic fiber material of the present disclosure, the surface of the resin base material is coated with an adhesive layer of the adhesive composition. This can provide an organic fiber material with excellent durability while ensuring good environmental friendliness and workability. The resin base material is particularly preferably polyester resin, aromatic polyamide resin or acrylic resin, among which polyester resin is preferred. Further, the resin base material is preferably a cord obtained by twisting a plurality of filaments.

The method of coating the surface of the resin base material with the adhesive composition may be a method of immersing the organic fiber cord in the adhesive composition, a method of applying the adhesive composition with a brush, a method of spraying the adhesive composition, or the like, and an appropriate method may be used as needed. The method of coating the surface of the resin base material with the adhesive composition is not particularly limited. However, when the surface of the resin base material is coated with the adhesive composition, the adhesive composition is preferably dissolved in various solvents to reduce the viscosity, because the coating is facilitated in this case. It is environmentally preferable that the solvent is mainly composed of water.

When the organic fiber is coated with the adhesive composition, the adhesive composition is preferably dissolved in various solvents to reduce the viscosity, because the coating is facilitated in this case. It is environmentally preferable that the solvent for reducing the viscosity of the adhesive composition is mainly composed of water.

The solution concentration of the adhesive composition impregnated in the organic fiber is not particularly limited. However, it is preferably, in terms of solid content, 5.0 % by mass or more and 25.0 % by mass or less, and more preferably 7.5 % by mass or more and 20.0 % by mass or less with respect to the mass of the organic fiber.

The thickness of an adhesive layer of the adhesive composition is not particularly limited, but it is preferably 50 µm or less, and it is more preferably 0.5 µm or more and 30 µm or less.

Especially when applying the organic fiber-rubber composite of the present disclosure to a tire, if the amount of the adhesive composition coated by the adhesive treatment is large, the adhesive durability under tire rolling tends to decrease. The reason is as follows. Due to the high rigidity of a fiber material, the adhesive composition at the interface of an adhered fiber material has relatively small deformation because the fiber material bears the stress due to strain. However, the deformation due to strain increases as the distance from the interface increases. Because the adhesive composition contains a large amount of thermosetting condensate as compared with the adhered rubber material, it is hard and brittle. As a result, the adhesive fatigue under repeated strain tends to increase. Therefore, the average thickness of the adhesive composition layer is preferably 50 µm or less. It is more preferably 0.5 µm or more and 30 µm or less.

When the resin base material is a cord, the adhesive layer in the organic fiber is preferably 0.5 % by mass to 6.0 % by mass of the mass of the cord in terms of dry mass. When the dry mass of the adhesive layer is within this range, suitable adhesiveness can be ensured.

The organic fiber coated with the adhesive composition can be subjected to drying, heat treatment, and other treatment in the same manner as the organic fiber material described above.

The organic fiber material in which the surface of an organic fiber is coated with the adhesive composition is, for example, dried at a temperature of 100 °C to 210 °C and then subjected to heat treatment. The heat treatment is preferably performed at a temperature equal to or higher than the glass transition temperature of the polymer of the resin base material, preferably a temperature of [the melting temperature of the polymer - 70 °C] or higher and [the melting temperature of the polymer - 10 °C] or lower.
The reason this case is preferable is as follows. When the temperature is lower than the glass transition temperature of the polymer, the molecular mobility of the polymer is poor, and the adhesion-promoting components in the adhesive composition cannot interact with the polymer sufficiently. As a result, the bonding strength between the adhesive composition and the resin base material cannot be obtained. The resin base material may be pretreated by electron beam, microwave, corona discharge, plasma treatment, or the like.

### [Organic fiber-rubber composite]

An organic fiber-rubber composite of the present disclosure is a composite of organic fiber and rubber, where the organic fiber is coated with the adhesive composition described above. In this case, good adhesiveness can be obtained without using resorcin, and an organic fiber-rubber composite with good environmental friendliness and workability can be obtained. The adhesive composition of the present disclosure is particularly excellent in adhesion between an organic fiber such as an organic fiber cord and a coated rubber composition.

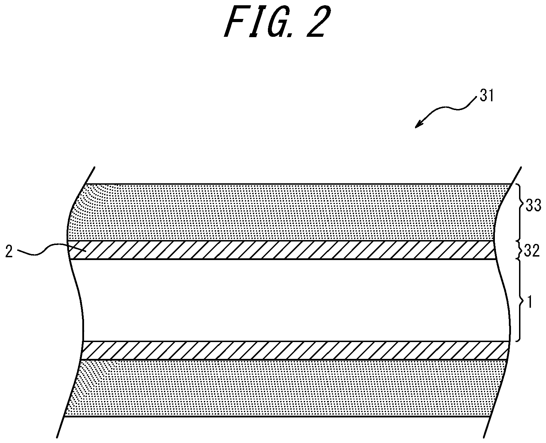

The organic fiber-rubber composite of the present disclosure will be described in detail with reference to FIG. 2.

FIG. 2 schematically illustrates a cross section of an organic fiber cord-rubber composite, which is an example of the organic fiber-rubber composite of the present disclosure. In an organic fiber-rubber composite 31 illustrated in FIG. 4, the outer surface in the outer diameter direction of an organic fiber cord 1 is coated with an adhesive layer 32 formed by an adhesive composition 2 of the present disclosure. The organic fiber cord 1 is further adhered to a coated rubber composition 33 located on the outer side in the outer diameter direction via the adhesive 32 of the adhesive composition 2 to form the organic fiber-rubber composite 31 of the present disclosure.

In addition to the organic fiber cord-rubber composite, a reinforcing material for rubber articles using the adhesive composition of the present disclosure may be a short fiber, a non-woven fabric, or the like.

### <Organic fiber cord>

An organic fiber cord, which is an example of the organic fiber, is used to supplement the strength of a rubber article such as a tire. When the organic fiber cord is used as a reinforcing material, spun organic fiber yarn is first twisted to obtain an organic fiber cord. Then, the organic fiber cord is embedded in rubber that covers the organic fiber cord using an adhesive composition, and vulcanization is performed to adhere them to form an organic fiber-rubber composite. The organic fiber-rubber composite can be used as a reinforcing member of a rubber article such as a tire.

The material of the organic fiber is not particularly limited, and fiber materials typified by aliphatic polyamide fiber such as polyester, 6-nylon, 6,6-nylon and 4,6-nylon, protein fiber such as artificial fibroin fiber, polyketone fiber, aromatic polyamide fiber typified by polynonamethylene terephthalamide and paraphenylene terephthalamide, acrylic fiber, carbon fiber, and cellulose fiber such as rayon and lyocell can be used. Among the above, it is preferable to use polyester, 6-nylon, and 6,6-nylon, and it is particularly preferable to use 6,6-nylon.

The material of the polyamide fiber is a polymer having an amide bond in the main chain, and more specifically, it is one where 80 % or more of the bonding mode of the repeating units in the main chain is an amide bonding mode. Examples of the polyamide include, but are not limited to, dicarboxylic acids such as adipic acid, sebacic acid and terephthalic acid, and those obtained by condensation of diamines, such as hexaethylenediamine, nonanediamine, methylpentadiamine, p-phenylenediamine and m-phenylenediamine, through an amide bonding reaction. The most typical aliphatic polyamide is 6,6-nylon.

The organic fiber cord is preferably an organic fiber cord obtained by twisting a plurality of single fiber filaments, especially for the purpose of reinforcing rubber articles such as tires or conveyor belts. Further, the organic fiber cord is preferably an organic fiber cord obtained by twisting second twisted single fiber filaments and first twisted single fiber filaments.

The fiber thickness of the organic fiber cord is preferably in a range of 100 dtex or more and 5000 dtex or less. Regarding the number of twists (times/10 cm), the number of first twists is preferably 10 times/10 cm to 50 times/10 cm in the tire of the present disclosure, and the number of second twists is preferably 10 times/10 cm to 50 times/10 cm in the tire of the present disclosure.

Further, it is preferably an organic fiber-rubber composite where the cord obtained by twisting a plurality of filaments is a 66-nylon tire cord having a twist structure of 1400 dtex/2, a second twist number of 39 times/10 cm and a first twist number of 39 times/10 cm, and the adhesive composition is adhered to the tire cord.

The coated rubber composition of the organic fiber-rubber composite of the present disclosure preferably contains a rubber component and various compounding agents usually used in the rubber industry. The rubber component is not particularly limited, and examples thereof include natural rubber, conjugated diene-based synthetic rubber such as polyisoprene rubber (IR), polybutadiene rubber (BR), styrene-butadiene copolymer rubber (SBR), acrylonitrile-butadiene rubber (NBR), chloroprene rubber (CR) and butyl rubber (IIR), and ethylene-propylene copolymer rubber (EPM), ethylene-propylene-diene copolymer rubber (EPDM), and polysiloxane rubber. Among the above, natural rubber and conjugated diene-based synthetic rubber are preferable. These rubber components may be used alone or in combination of two or more.

The organic fiber-rubber composite of the present disclosure can be produced by coating an organic fiber, such as an organic fiber cord, with the adhesive composition of the present disclosure to form an adhesive layer, and co-vulcanizing and adhering the (A) rubber latex having unsaturated diene in the adhesive composition and the rubber component in the coated rubber composition that is an adherend of the organic fiber.

Finally, for the organic fiber coated with the adhesive composition, the (A) rubber latex having unsaturated diene in the adhesive composition and the rubber component in the coated rubber composition that is an adherend of the organic fiber are co-vulcanized and adhered to each other.

In the co-vulcanization of the rubber component in the coated rubber composition, for example, sulfur, tylalium polysulfide compounds such as tetramethyltylalium disulfide and dipentamethylenetylalium tetrasulfide, organic vulcanizing agents such as 4,4-dithiomorpholin, p-quinone dioxime, p,p'-dibenzoquinone dioxime, and cyclic sulfur imide, and the like may be used. Among the above, it is preferable to use sulfur. Further, various compounding agents such as a filler like carbon black, silica and aluminum hydroxide commonly used in the rubber industry, a vulcanization accelerator, an age resistor, and a softener may be appropriately added to the rubber component in the coated rubber composition.

Needless to say, the adhesive composition of the present disclosure can obtain an adhesive effect even in an adhesive method where a vulcanizing agent contained in an adherend of a synthetic organic fiber material such as an organic fiber and/or an adherend of a coated rubber composition is transferred to the adhesive composition, and the adhesive composition is cross-linked by the transferred vulcanizing agent.

### [Rubber article]

The adhesive composition of the present disclosure uses the organic fiber-rubber composite of the present disclosure. As a result, good adhesiveness can be obtained without using resorcin, and a rubber article with good environmental friendliness and workability can be obtained. Examples of the rubber article of the present disclosure include a tire, a conveyor belt, a belt, a hose, and an air spring.

### <Tire>

The tire of the present disclosure uses the organic fiber-rubber composite of the present disclosure. As a result, good adhesiveness can be obtained without using resorcin, and a tire with good environmental friendliness and workability can be obtained.

In the tire of the present disclosure, the organic fiber-rubber composite can be used, for example, as a carcass, a belt, a belt reinforcing layer, and a reinforcing layer around a belt such as a flipper.

In accordance with the type of tire to be used, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. For the tire of the present disclosure, an organic fiber cord or the like that has been treated with the above-described adhesive composition can be used in any part of the tire, and other members are not particularly limited and may be known members. The tire of the present disclosure is preferably a pneumatic tire. The pneumatic tire may be filled with ordinary air or air with an adjusted partial pressure of oxygen, or may also be filled with an inert gas such as nitrogen, argon, or helium.

The adhesive composition, organic fiber material, and organic fiber-rubber composite of the present disclosure described above can be applied to, in addition to the tire, all rubber articles such as a conveyor belt, a belt, a hose, and an air spring.

### EXAMPLES

The following describes the present disclosure in more detail with reference to examples, but the present disclosure is not limited to the following examples.

### <(A) Rubber latex having unsaturated diene>

In the following comparative examples and examples, vinylpyridine-styrene-butadiene copolymer latex was prepared and used in accordance with Comparative Example 1 described in JP H09-78045 A and used as the (A) rubber latex having unsaturated diene as follows.

In a nitrogen-substituted autoclave having a capacity of 5 liters, 130 parts by mass of deionized water and 4.0 parts by mass of potassium rosinate as an emulsifier were charged and dissolved. A monomer mixture having a composition of 15 parts by mass of vinylpyridine monomer, 15 parts by mass of styrene and 70 parts by mass of butadiene, and 0.60 parts by mass of t-dodecyl mercaptan as a chain transfer agent were added to this and emulsified. Next, the temperature was raised to 50 °C, 0.5 parts by mass of potassium persulfate as a polymerization initiator was added, and polymerization was started. After the reaction rate of the monomer mixture reached 90 %, 0.1 parts by mass of hydroquinone was added to terminate the polymerization. Next, unreacted monomers were removed under reduced pressure to obtain vinylpyridine-styrene-butadiene copolymer latex having a solid content concentration of 41 % by mass.

### <(B) Compound containing acrylamide structure having cationic group and/or carboxyl group>

In each example, the following (B-1) to (B-4) were used as the (B) compound containing an acrylamide structure having a cationic group and/or a carboxyl group. They were diluted 10 times (diluted to 1/10 concentration) with deionized water to obtain aqueous solutions, and the aqueous solutions were used to prepare adhesive compositions.
(B-1) Product name "HASIZE CP-300" manufactured by Harima Chemicals Group, Inc. (aqueous solution with a solid content concentration of 25 %) that was cationic polyacrylamide was used as a compound containing an acrylamide structure having a cationic group.
(B-2) Product name "HARMIDE C-10" manufactured by Harima Chemicals Group, Inc. (aqueous solution with a solid content concentration of 10 %) that was anionic polyacrylamide was used as a compound containing an acrylamide structure having a carboxyl group.
(B-3) Product name "DA4106" manufactured by SEIKO PMC CORPORATION (aqueous solution with a solid content concentration of 15 %) that was anionic polyacrylamide was used as a compound containing an acrylamide structure having a carboxyl group.
(B-4) Product name "HARMIDE KS2" manufactured by Harima Chemicals Group, Inc. (aqueous solution with a solid content concentration of 20 %) that was amphoteric polyacrylamide was used as a compound containing an acrylamide structure having a cationic group and a carboxyl group.
(B-5) Product name "DS4433" manufactured by SEIKO PMC CORPORATION (aqueous solution with a solid content concentration of 20 %) that was amphoteric polyacrylamide was used as a compound containing an acrylamide structure having a cationic group and a carboxyl group.

### <(C-1) Aqueous compound having (thermal dissociative blocked) isocyanate group>

The following (C-1) or (C-2) was used as it was as the (C) aqueous compound having a (thermal dissociative blocked) isocyanate group.
(C-1) "DM-6400" manufactured by Meisei Chemical Works, Ltd. (blocking agent thermal dissociation temperature: about 130 °C, solid content concentration: 40 % by mass) that was a methyl ethyl ketoxime block-dimenylmethane diisocyanate compound
(C-2) Product name "ELASTRON BN77" manufactured by DKS Co. Ltd. (F-2955D-1, blocking agent thermal dissociation temperature: about 160 °C, pH: 8.0, solid content concentration: 31 % by mass) that was an aqueous urethane compound having a (thermal dissociative blocked) isocyanate group

### <(D) Polyphenol>

The following (D-1) that was a lignin sulfonate was used as the (D) polyphenol. Powdered polyphenol was dissolved in deionized water to obtain an aqueous solution with a solid content concentration of 5 % by mass, and the aqueous solution was used to prepare adhesive compositions.
(D-1) Product name "Lignin (alkali)" (CAS Number: 8061-51-6) manufactured by Tokyo Chemical Industry Co., Ltd. (TCI) that was a partially desulfonated lignin sulfonate with a reduced degree of sulfonation

### <(E) Polyvalent metal salt>

The following (E-1) a polyvalent metal salt serving as a mordant for organic fibers, or (E-2) a fixing agent for inorganic fillers was used as the (E) polyvalent metal salt, and their aqueous solutions were used to prepare adhesive compositions.
(E-1) Product name "Copper (II) gluconate" manufactured by Tokyo Chemical Industry Co., Ltd. (TCI) (CAS Number: 527-09-3, solid powder, purity 97 % or more) was stirred and dissolved in deionized water to obtain a solid content concentration of 0.5 %, and the aqueous solution was used to prepare adhesive compositions.
(E-2) Product name "Light calcium carbonate" manufactured by Toyo Denka Kogyo Co., Ltd. (solid powder, purity 98 % or more, apparent specific gravity 0.24, moisture 1 % or less) was used as it was to prepare adhesive compositions.

### <<Preparation of latex adhesive composition (Comparative Example 1)>>

The (A) rubber latex and water were blended (wet blending) as listed in Table 2 and mixed where the amount was adjusted to obtain a solid content concentration of 16.6 % by mass, and then the mixture was sufficiently stirred to obtain a latex adhesive composition (Comparative Example 1).

### <<Preparation of latex-aqueous urethane adhesive composition (Comparative Examples 2 and 3)»

The (A) rubber latex having unsaturated diene and the (C-1) aqueous compound having a (thermal dissociative blocked) isocyanate group were blended (wet blending) as listed in Table 2 and mixed where the amount was adjusted with water to obtain an adhesive composition solid content concentration of 16.6 % by mass, and then the mixture was sufficiently stirred to obtain a latex-aqueous urethane adhesive composition (Comparative Example 2).

Further, the (A) rubber latex having unsaturated diene and the (C-2) aqueous compound having a (thermal dissociative blocked) isocyanate group were blended (wet blending) as listed in Table 2 and mixed where the amount was adjusted with water to obtain an adhesive composition solid content concentration of 16.6 % by mass, and then the mixture was sufficiently stirred to obtain a latex-aqueous urethane adhesive composition (Comparative Example 3).

### <<Preparation of latex-polyphenol adhesive composition (Comparative Example 4)>>

The (A) rubber latex having unsaturated diene and the (D) polyphenol were blended (wet blending) as listed in Table 2 and mixed where the amount was adjusted with water to obtain an adhesive composition solid content concentration of 16.6 % by mass, and then the mixture was sufficiently stirred to obtain a latex-polyphenol adhesive composition (Comparative Example 4).

### <<Preparation of latex-polyvalent metal salt adhesive composition (Comparative Examples 5 and 6)>>

The (A) rubber latex having unsaturated diene and the (E) polyvalent metal salt were blended (wet blending) as listed in Table 2 and mixed where the amount was adjusted with water to obtain an adhesive composition solid content concentration of 16.6 % by mass, and then the mixture was sufficiently stirred to obtain a latex-polyphenol adhesive composition (Comparative Examples 5 and 6).

The adhesive composition using the polyvalent metal salt of (E-2) calcium carbonate was a well-stirred suspension.

### <<Preparation of adhesive composition as one embodiment of the present disclosure (Examples 1 to 21)>>

As listed in Table 2, each of predetermined water for dilution, (E) polyvalent metal salt, (D) polyphenol, (B) compound containing an acrylamide structure having a cationic group and/or a carboxyl group, (A) rubber latex having unsaturated diene, (C) aqueous compound having a (thermal dissociative blocked) isocyanate group were blended (wet blending) in the stated order and mixed to obtain an adhesive composition solid content concentration of 16.6 % by mass, and then the mixture was sufficiently stirred to obtain an adhesive composition as one embodiment of the present disclosure (Examples 1 to 21).

### <Coating of tire cord with each adhesive composition>

Tire cords made of 66-nylon having a twist structure of 1400 dtex/2, a second twist number of 39 times/10 cm and a first twist number of 39 times/10 cm were used as organic fiber cords.

The tire cord was immersed in the adhesive composition of each comparative example and example, where the concentration of the adhesive composition impregnated in the tire cord was adjusted to 3.3 % by mass with respect to the mass of the organic fiber cord.

Next, they were subjected to drying in a drying zone (160 °C, 60 seconds), resin heat curing with tension applied (33 N/piece) in a hot zone (23540 °C, 60 seconds), and heat curing with the tension released in a normalizing zone (235 °C, 60 seconds) in the stated order to obtain tire cords coated with the adhesive composition of each sample.

### <Preparation of tire cord-rubber composite>

The tire cords coated with the adhesive composition of each comparative example and example were embedded in unvulcanized rubber compositions and co-vulcanization was performed at 160 °C for 20 minutes. Rubber compositions containing natural rubber, styrene-butadiene rubber, carbon black, vulcanizing chemicals and the like were used as the unvulcanized rubber compositions for coating.

### <Evaluation of workability of adhesive composition>

The workability of the adhesive composition of each comparative example and example was evaluated as follows.

### (1) Evaluation of mechanical stability (solidification rate)

The mechanical stability (solidification rate) of each adhesive composition was determined with a method using a Maron mechanical stability tester for copolymer latex composition described in JIS K6392-1995 (Maron stability tester No.2312-II, manufactured by KUMAGAI RIKI KOGYO Co., Ltd.).

In brief, each adhesive composition was subjected to shear strain for 10 minutes at a compression load of 10 kg and a rotation speed of 1000 r/min using the rotor of the Maron mechanical stability tester, and then the solidification rate% was evaluated by the following expression with the amount of formed solid product. The value was rounded off to the first decimal place. A smaller value indicates better mechanical stability. Solidification rate (%) = (dry mass of formed solid product)/(solid content mass of adhesive liquid under test) × 100

### (2) Evaluation of adhesion to drawing roller

The polyethylene terephthalate tire cord, which was an organic fiber cord, was continuously treated for 2000 m in an immersion treatment machine for storing each adhesive composition. The amount of each adhesive composition adhered to the drawing roller was visually observed and evaluated in the following five levels.
Extra-large: a very large amount
Large: a large amount
Medium: a medium amount
Small: a small amount
Little: a very small amount

### (3) Evaluation of adhesiveness of adhesive composition

The adhesiveness of the adhesive composition of each comparative example and example was evaluated as follows.

### «Evaluation of adhesive strength»

By pulling the tire cord-rubber composite obtained using each adhesive composition at a rate of 300 mm/min, the tire cord was peeled off from the tire cord-rubber composite, and the peeling resistance per tire cord was determined and used as the adhesive strength (N/piece).

### «Evaluation of adhesion state of coated rubber»

For the tire cord peeled off from the tire cord-rubber composite, the adhesion state of the coated rubber was visually observed and scored according to Table 1 below.

### [Table 1]

**Table 1**

| Score of adhesion state of coated rubber | Adhesion area ratio of coated rubber to tire cord (organic fiber cord) | State of cord filament |
|---|---|---|
| A | 80% or more and 100% or less | Filament is not broken |
| B | 60% or more and less than 80% | Filament is not broken |
| C | 40% or more and less than 60% | Filament is not broken |
| D | 20% or more and less than 40% | Filament is not broken |
| E | 0% or more and less than 20% | Filament is not broken |

### <Results of workability evaluation and adhesiveness evaluation of adhesive composition>

The following Table 2 lists the composition of the adhesive composition of each comparative example and example, and the workability evaluation and adhesiveness evaluation results thereof, respectively.

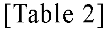

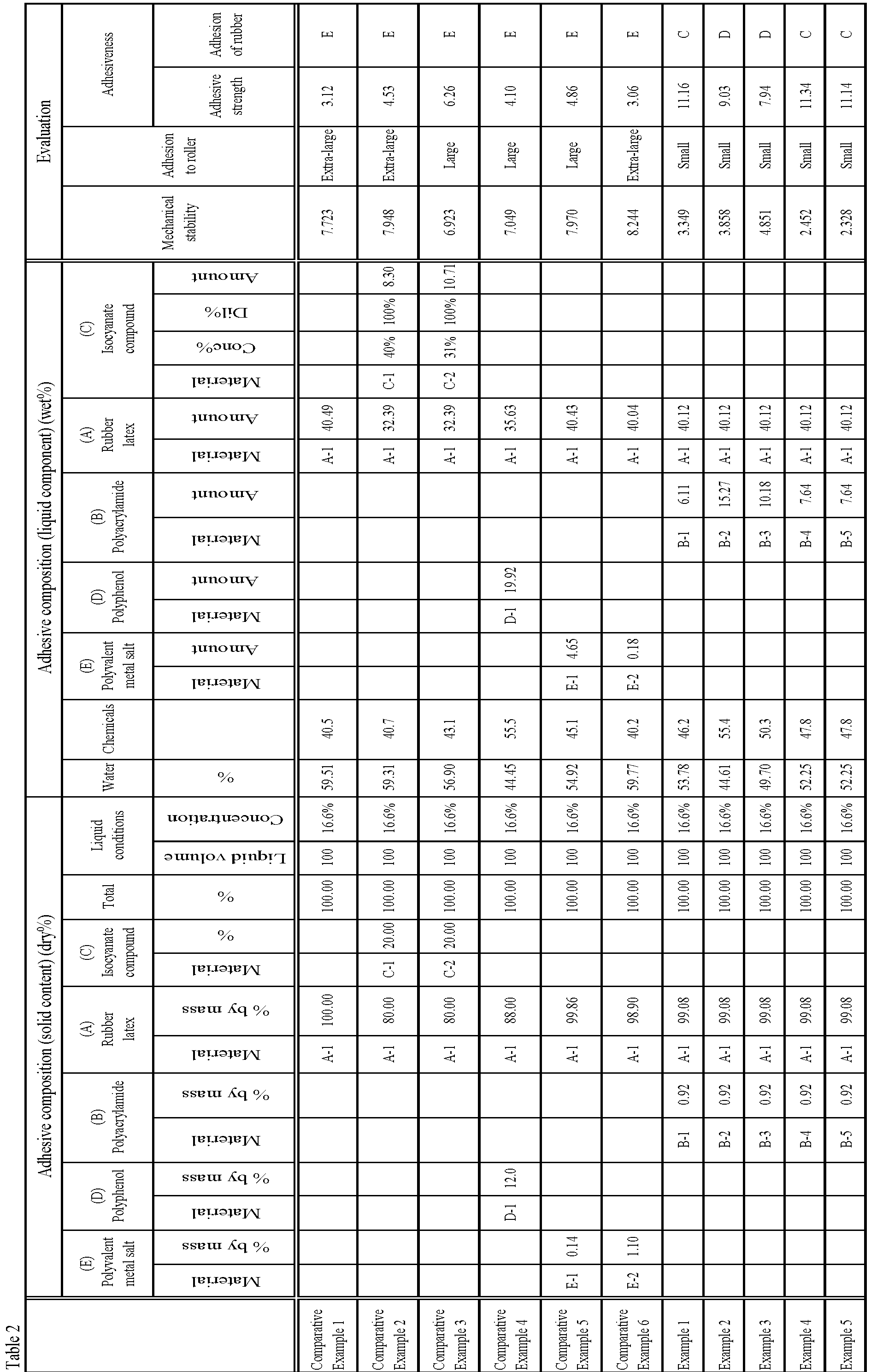

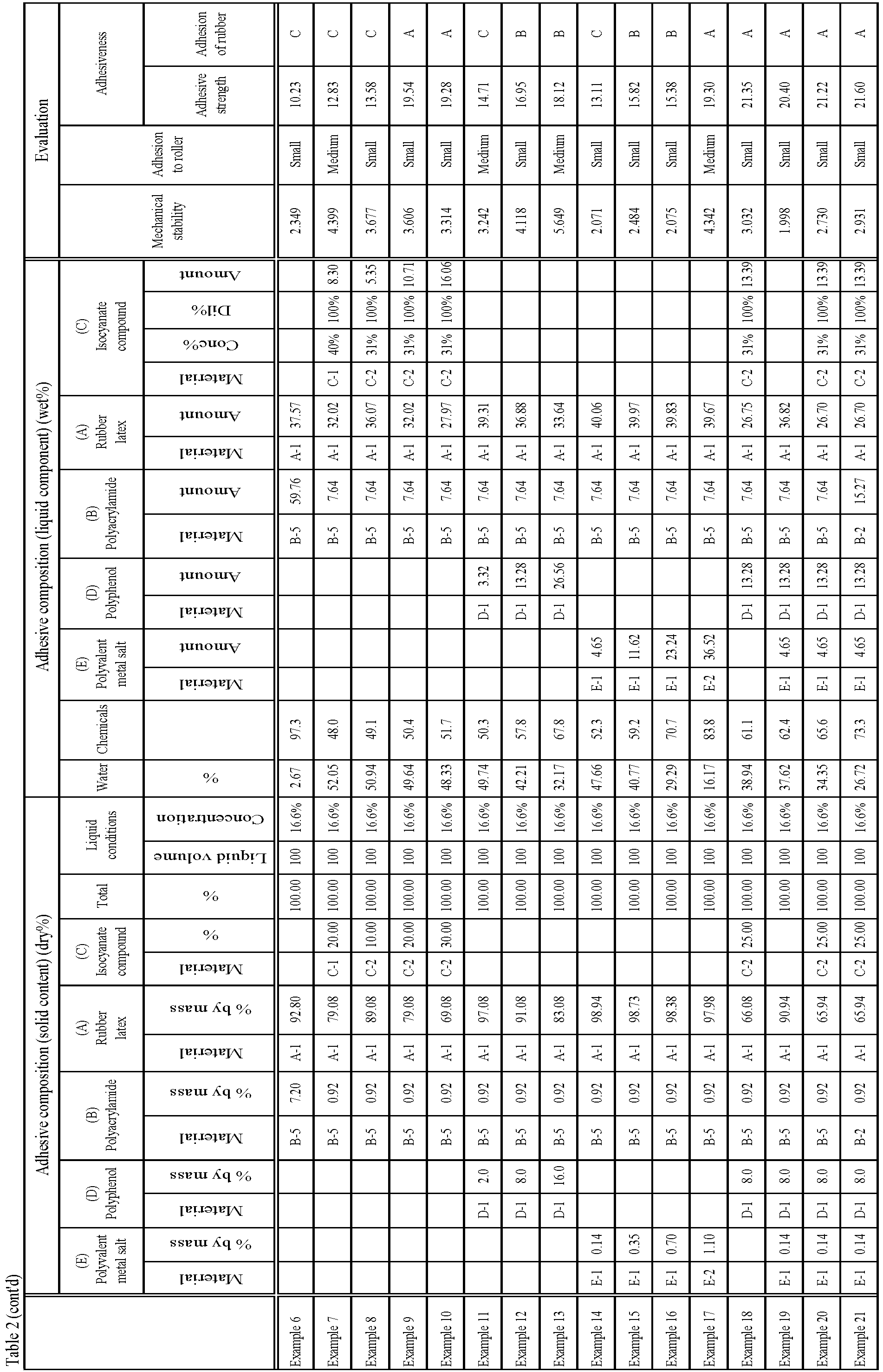

The results listed in Table 2 indicate that the adhesive composition of each Example has good workability and good adhesion between an organic fiber and a coated rubber composition.

### INDUSTRIAL APPLICABILITY

According to the present disclosure, it is possible to provide to an adhesive composition that can ensure desired adhesiveness without using resorcin and does not impair workability in use, as well as an organic fiber material, a rubber article, an organic fiber-rubber composite, and a tire using the adhesive composition. Therefore, the present disclosure can be used in the industrial fields of manufacturing rubber articles such as tires.

### REFERENCE SIGNS LIST

- 1: organic fiber cord
- 2: adhesive composition
- 3: immersion bathtub (dipping tub)
- 4: organic fiber cord coated with the adhesive composition
- 5: drawing roll
- 6: drying zone
- 7: hot zone
- 8: normalizing zone
- 31: organic fiber-rubber composite
- 32: adhesive layer of adhesive composition
- 33: coated rubber composition

## Claims

1. An adhesive composition, comprising
(A) rubber latex having unsaturated diene, and
(B) a compound containing an acrylamide structure having either or both of a cationic group and a carboxyl group, and
further comprising at least one compound selected from the group consisting of
(C) an aqueous compound having a (thermal dissociative blocked) isocyanate group,
(D) polyphenol, and
(E) a polyvalent metal salt.

2. The adhesive composition according to claim 1, wherein
the (B) compound containing an acrylamide structure having either or both of a cationic group and a carboxyl group is either or both of a copolymer containing (a) (meth)acrylamide and (b) a vinyl monomer having a cationic group, and a copolymer of (a) (meth)acrylamide and (c) a vinyl monomer having a carboxyl group, and
these copolymers optionally contain (d) another polymerizable monomer that is copolymerizable.

3. The adhesive composition according to claim 1 or 2, wherein the (C) aqueous compound having a (thermal dissociative blocked) isocyanate group is (C-1) a water-dispersible (thermal dissociative blocked) isocyanate compound comprising an addition product of polyisocyanate having an aromatic ring and a blocking agent having at least one active hydrogen group.

4. The adhesive composition according to claim 3, wherein the (C-1) water-dispersible (thermal dissociative blocked) isocyanate compound comprising an addition product of polyisocyanate having an aromatic ring and a blocking agent having at least one active hydrogen group is a block body of methylene diphenyl diisocyanate.

5. The adhesive composition according to claim 1 or 2, wherein the (C) aqueous compound having a (thermal dissociative blocked) isocyanate group is (C-2) an aqueous urethane compound having a (thermal dissociative blocked) isocyanate group.

6. The adhesive composition according to claim 5, wherein the aqueous urethane compound having a (thermal dissociative blocked) isocyanate group is a reaction product obtained by mixing (α), (β), (γ) and (δ) and reacting them, where
(α) is an organic polyisocyanate compound having 3 or more and 5 or less functional groups and having a number average molecular weight of 2,000 or less,
(β) is a compound having 2 or more and 4 or less active hydrogen groups and having a number average molecular weight of 5,000 or less,
(γ) is a thermal dissociative blocking agent, and
(δ) is a compound having at least one active hydrogen group and at least one anionic, cationic, or nonionic hydrophilic group, and
(α), (β), (γ) and (δ) are mixed so that
a mixing ratio of (α) is 40 % by mass or more and 85 % by mass or less,
a mixing ratio of (β) is 5 % by mass or more and 35 % by mass or less,
a mixing ratio of (γ) is 5 % by mass or more and 35 % by mass or less, and
a mixing ratio of (δ) is 5 % by mass or more and 35 % by mass or less with respect to the total amount of (α), (β), (γ) and (δ), and
when a molecular weight of an isocyanate group (-NCO) is 42, a composition ratio of a (thermal dissociative blocked) isocyanate group in the reaction product is 0.5 % by mass or more and 11 % by mass or less.

7. The adhesive composition according to claim 5, wherein the (C-2) aqueous urethane compound having a (thermal dissociative blocked) isocyanate group is represented by the following general formula (1), 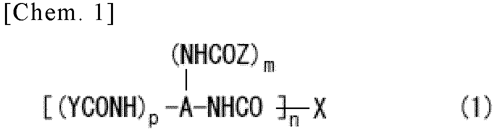 where
A is a residue of an organic polyisocyanate compound from which an active hydrogen group has been eliminated,
X is a residue of a polyol compound having 2 or more and 4 or less hydroxyl groups and having a number average molecular weight of 5,000 or less from which an active hydrogen group has been eliminated,
Y is a residue of a thermal dissociative blocking agent from which an active hydrogen group has been eliminated,
Z is a residue of a compound having at least one active hydrogen group and at least one salt-producing group or hydrophilic polyether chain, from which an active hydrogen group has been eliminated,
n is an integer of 2 or more and 4 or less, and
p + m is an integer of 2 or more and 4 or less, where m ≥ 0.25.

8. The adhesive composition according to claim 1 or 2, wherein the (D) polyphenol is a plant-derived compound having a plurality of phenolic hydroxy groups in molecule.

9. The adhesive composition according to any one of claims 1 to 8, wherein the (D) polyphenol is lignin, tannin, tannic acid, flavonoid, or a derivative thereof.

10. The adhesive composition according to claim 1 or 2, wherein the (E) polyvalent metal salt is a divalent or higher metal ion salt.

11. The adhesive composition according to claim 1 or 2, wherein the (E) polyvalent metal salt is a polyvalent metal salt inorganic filler or mordant.

12. The adhesive composition according to claim 1 or 2, comprising no resorcin.

13. An organic fiber, wherein a surface of the organic fiber is coated with an adhesive layer of the adhesive composition according to claim 1 or 2.

14. The organic fiber according to claim 13, wherein the organic fiber is a cord obtained by twisting a plurality of filaments.

15. The organic fiber according to claim 14, wherein the cord obtained by twisting a plurality of filaments comprises second twisting and first twisting, the cord obtained by twisting has a fiber thickness of 100 dtex to 5000 dtex, and the number of twists is 10 times/10 cm to 50 times/10 cm for first twists and 10 times/10 cm to 50 times/10 cm for second twists.

16. The organic fiber according to claim 15, wherein the adhesive layer is 0.5 % by mass to 6.0 % by mass of the mass of the cord in dry mass.

17. The organic fiber according to claim 1 or 2, wherein the organic fiber is made of polyester resin.

18. An organic fiber-rubber composite, which is a composite of an organic fiber and rubber, wherein a surface of the organic fiber is coated with the adhesive composition according to claim 1 or 2.

19. A rubber article, using the organic fiber-rubber composite according to claim 18.

20. A tire, using the organic fiber-rubber composite according to claim 18.
